# EUROPÄISCHE PATENTSCHRIFT

(11) **EP 3 426 014 B1**
(45) Veröffentlichungstag und Bekanntmachung des Hinweises auf die Patenterteilung: **08.01.2020**
(21) Anmeldenummer: 17713886.4
(22) Anmeldetag: 09.03.2017
(51) Int. Cl.: A01C 17/00

(54) **VERTEILMASCHINE**
DISTRIBUTION MACHINE
MACHINE DE DISTRIBUTION

(30) Priorität: 09.03.2016 DE 102016002827
(43) Veröffentlichungstag der Anmeldung: 16.01.2019
(73) Patentinhaber: RAUCH Landmaschinenfabrik GmbH, 76547 Sinzheim (DE)
(72) Erfinder: STÖCKLIN, Volker, 77975 Ringsheim (DE)
(74) Vertreter: Lichti - Patentanwälte Partnerschaft mbB
(86) Internationale Anmeldenummer: PCT/EP2017/000311
(87) Internationale Veröffentlichungsnummer: WO 2017/153046

(56) Entgegenhaltungen:
- EP-A1- 2 301 316
- EP-A2- 0 222 337

## Beschreibung

Die Erfindung betrifft eine Verteilmaschine, insbesondere Streu- und/oder Sämaschine, mit wenigstens einem von einem Tragrahmen getragenen Behälter zur Aufnahme von pulver- und/oder partikelförmigem Verteilgut, wenigstens einer am Boden des Behälters angeordneten Auslauföffnung, einem der Auslauföffnung nachgeordneten Dosierorgan sowie wenigstens einem dem Dosierorgan nachgeordneten Verteilorgan zum Verteilen des Verteilgutes auf dem Boden.

Verteilmaschinen der vorgenannten Art sind vornehmlich einerseits in Form von landwirtschaftlichen Streumaschinen zum Ausbringen von pulver- oder partikelförmigen Gut, wie insbesondere Dünger oder Saatgut, in vielfältiger Ausgestaltung bekannt, so beispielsweise in gezogener oder von einem Dreipunkt einer Zugmaschine, wie eines Traktors, aufgenommener Bauart. Derartige Verteilmaschinen umfassen einen das Verteilgut aufnehmenden Behälter, an dessen Boden üblicherweise eine oder zwei Auslauföffnungen angeordnet sind, wobei der jeweiligen Auslauföffnung ein Dosierorgan zugeordnet ist, um das Verteilgut in der gewünschten Menge - oder genauer: mit dem gewünschten Massenstrom - dem Behälter zu entnehmen. Das Dosierorgan ist mittels eines geeigneten Stellorgans in Form eines Hydraulik- oder Elektrozylinders auf- und zusteuerbar, um je nach gewünschter Verteilungsbreite des Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Unterhalb des Dosierorgans befindet sich ein Verteilorgan, mittels welchem das Verteilgut über die gewünschte Arbeitsbreite verteilt wird. Manche Verteilmaschinen sind überdies mit einer Einrichtung zur Verstellung des Aufgabepunktes des Verteilgutes auf das, insbesondere von einer mit Wurfflügeln bestückten Verteilerscheibe gebildete, Verteilorgan ausgestattet, wobei der Aufgabepunkt in Bezug auf die Verteilerscheibe radial (insbesondere zu Vergrößerung/Verkleinerung des Streufächers) und/oder in Umfangsrichtung (insbesondere zum Verdrehen des Streufächers etwa um die Drehachse der Verteilerscheibe) verstellbar sein kann. Eine derartige landwirtschaftliche Verteilmaschine ist beispielsweise aus der DE 10 2005 015 228 A1 bekannt.

Andererseits sind gattungsgemäße Verteilmaschinen in Form von Winterdienststreumaschinen bekannt, bei welchen der Behälter vornehmlich zur Aufnahme von in der Regel granulatförmigem Splitt und/oder Streusalz dient, wobei die Funktion einer solchen Winterdienststreumaschine weitestgehend jener der oben beschriebenen landwirtschaftlichen Streumaschine entspricht.

Beim Ausbringen des Verteilgutes - sei es in Form von Dünger oder Saatgut auf einem Feld oder sei es in Form von Splitt oder Salz auf einer Straße - werden in aller Regel große Mengen an Partikeln von Erde, Sand, Staub und dergleichen aufgewirbelt, welche insbesondere an die unterhalb des Behälters angeordneten Dosierorgane und deren Stellzylinder sowie an die häufig vorhandene Einrichtung zur Verstellung des Aufgabepunktes des Verteilgutes auf die Verteilorgane bzw. deren Stellzylinder gelangen können, wodurch je nach Beschaffenheit und Größe der Partikel die Funktion beeinträchtigt werden kann. Dies gilt, wie gesagt, insbesondere in Bezug auf die Stellzylinder der Dosierorgane sowie - sofern vorhanden - für die Stellzylinder der Einrichtung zur Verstellung des Aufgabepunktes des Verteilgutes auf das Verteilorgan, sofern sich größere Partikel einschließlich kleiner Steine dort verklemmen. Darüber hinaus neigt insbesondere das Verteilgut, welches gleichfalls in Pulver- oder Partikelform vorliegt, häufig zur Anreicherung an den unterhalb des Behälters befindlichen Funktionsteilen der vorgenannten Art, wobei insbesondere die meisten festen Düngemittel wie auch Streusalz einen hygroskopischen Charakter besitzen, so dass sie in Verbindung mit Luftfeuchtigkeit oder gar Regen bzw. Schnee(matsch) agglomerieren und mit fortschreitender Ausbringung zunehmend in mehr oder minder harten Agglomeraten den Funktionsteilen anhaften. Dies gilt insbesondere - wenn auch nicht ausschließlich - dann, wenn die Verteilorgane von Streu- bzw. Verteilerscheiben gebildet sind, welche das pulver- oder partikelförmige Gut radial an den Funktionsteilen vorbei fortschleudern.

Die EP 2 727 449 A1 begegnet diesem Problem bei einer gattungsgemäßen Verteilmaschine mit einer unterhalb des Behälters angeordneten und mit einer Mehrzahl an Fluiddüsen ausgestatteten Reinigungseinrichtung. Dies bietet zwar - auch im Hinblick auf eine Reinigung der Dosierorgane selbst oder der Verteilorgane - entscheidende Vorteile, doch stellt die sich zwischen den durchgeführten Reinigungsvorgängen zunehmend einstellende Verschmutzung der Stellzylinder während des Betriebs gleichwohl ein Problem hinsichtlich ihrer Funktions- und Wartungssicherheit sowie ihrer notwendigen Robustheit dar.

Sofern es sich bei diesen, für den Antrieb der Dosierorgane sowie der gegebenenfalls vorhandenen Einrichtung zur Verstellung des Aufgabepunktes des Verteilgutes auf dem Verteilorgan vorgesehenen Stellzylinder um Hydraulikzylinder handelt, deren translatorische Bewegung der Kolbenstange mittels geeigneter Hebelgestänge in eine translatorische oder in eine rotatorische Bewegung eines jeweiligen verlagerbaren Funktionsteils der Einrichtung zur Verstellung des Aufgabepunktes und/oder eines Dosierschiebers des Dosierorgans umgesetzt wird, wie sie aufgrund ihres einfachen Anschlusses an das Hydrauliksystem eines Traktors häufig zum Einsatz gelangen, ist es aufgrund der aggressiven Umgebungsbedingungen ferner einerseits erforderlich, zumindest die Kolbenstangen der Hydraulikzylinder aus sehr harten und chemisch resistenten Materialien, wie verchromtem Edelstahl, zu fertigen, andererseits werden sehr hohe Anforderungen an die zur Abdichtung der Kolbenstangen gegen den Zylinder eingesetzten Dichtungselemente gestellt, da die Kolbenstangen während des Betriebs ständig, wenngleich teils nur geringfügig, aus dem Zylinder aus- bzw. in diesen eingeschoben werden, wodurch die Gefahr einer Einschleppung von an der Kolbenstange anhaftenden Fremdkörpern und/oder Feuchtigkeit ins Innere des Hydraulikzylinders besteht. Darüber hinaus sollte sich zur Gewährleistung eines einwandfreien und verschleißarmen Betriebs von Hydraulikzylindern auf deren Kolbenstange ein Ölfilm befinden, welcher jedoch aufgrund seines adhäsiven Charakters andererseits die Gefahr einer Anbackung von Verunreinigungen und somit deren Einschleppung in den internen Ölkreislauf erhöht. Überdies kann die zumindest teilweise aus dem Hydraulikzylinder ausgezogene Kolbenstange auch außerhalb des - bei gattungsgemäßen Verteilmaschinen üblicherweise saisonalen - Betriebs über Monate aggressiven Umgebungsbedingungen ausgesetzt sein, so dass es trotz der aufwändigen und inerten Materialien zur Korrosion. Die DE 10 2013 104 024 A1 versucht diesem Problem beispielsweise mit einem Schutzgehäuse des Hydraulikzylinders entgegenzuwirken, doch stellt sich auch hier die Schwierigkeit einer einwandfreien Dichtigkeit und gilt für die notwendigen Materialien und die Robustheit des Hydraulikzylinders selbst das oben gesagte.

Schließlich stellt sich bei Dosierorganen, welche einen relativ zu der Auslauföffnung des zur Bevorratung des Verteilgutes dienenden Behälters verlagerbaren Dosierschieber aufweisen, im Falle eines Antriebs des Dosierschiebers mittels eines Hydraulikzylinders ein weiteres Problem dahingehend, dass zur Einstellung einer gewünschten Dosierrate (entsprechend einer bestimmten Öffnungsstellung des Dosierschiebers relativ zu der Auslauföffnung) mittels einer Skala und einem Fixierungssystem ein mit der gewünschten Öffnungsstellung des Dosierschiebers korrespondierender Anschlag eingestellt werden muss, gegen welchen der Hydraulikzylinder dann anfahren kann. Auf diese Weise lässt sich zwar eine bestimmte Dosierrate bzw. ein bestimmter Massenstrom an Verteilgut einstellen, doch lässt sich diese(r) nicht verändern, wenn sich beispielsweise die Fahrgeschwindigkeit gegenüber der ursprünglich einkalkulierten Geschwindigkeit ändert (und folglich eine höhere oder niedrigere Dosierrate vonnöten wäre).

Aus diesem Grund machen moderne Verteilmaschinen anstelle von Hydraulikzylindern häufig von Elektrozylindern zum Antrieb der Dosierschieber der Dosierorgane sowie gegebenenfalls der Einrichtungen zur Verstellung des Aufgabepunktes des Verteilgutes auf die Verteilorgane Gebrauch, deren translatorische Bewegung der Kolbenstange in entsprechender Weise wie im Falle von Hydraulikzylindern mittels geeigneter Hebelgestänge in eine translatorische oder in eine rotatorische Bewegung eines jeweiligen verlagerbaren Funktionsteils der Einrichtung zur Verstellung des Aufgabepunktes und/oder eines Dosierschiebers des Dosierorgans umgesetzt wird. Derartige Elektrozylinder sind häufig mit Wegsensoren ausgestattet, um die genaue Auszugsposition der Kolbenstange in Bezug auf den Zylinder, welche repräsentativ für die Öffnungsstellung des Dosierorgans bzw. für die Lage des Aufgabepunktes ist, zu erfassen und insbesondere steuerungstechnisch zu nutzen (DE 40 12 826 A1 bzw. DE 41 34 315 A1).

Allerdings stellen die bei gattungsgemäßen Verteilmaschinen auf die Stellorgane der Dosierorgane bzw. der Einrichtungen zur Verstellung des Aufgabepunktes auf die Verteilorgane einwirkenden, aggressiven Stäube oder Partikel von Mineraldünger, Salz oder auch anderen Verunreinigungen von außen auch im Falle von Elektrozylindern ein nicht unerhebliches Funktionsproblem dar.

So entsteht beispielsweise beim Einziehen der Kolbenstange in bzw. beim Ausschieben derselben aus dem Elektrozylinder ein Über- bzw. Unterdruck im Innern des Zylinders, welcher bei gattungsfremden Applikationen zwar mittels geeigneter Ventile nach außen kompensiert werden kann, was im Falle von Verteilmaschinen jedoch schwerlich möglich ist, weil durch das Ventil Umgebungsstäube und/oder Feuchtigkeit in den Zylinder eindringen und zu Korrosion führen könnten. Andererseits birgt der im ausgeschobenen Zustand der Kolbenstange im Innern des Zylinders herrschende Unterdruck wiederum die Gefahr eines Einsaugens von Staub und/oder Feuchtigkeit, so dass - wie auch im Falle von Hydraulikzylindern - eine sehr hohe Dichtigkeit gewährleistet werden muss, was praktisch nur mit sehr kostspieligen Spezialdichtungen möglich ist. Sofern sich an der Kolbenstange verkrustete bzw. verhärtete Agglomerate gebildet haben, müssen diese ferner durch wirksame mechanische Abtreifer sicher zerstört und gelöst werden, um derartige Spezialdichtungen nicht zu beschädigen und die hohe Dichtigkeit aufrechtzuerhalten. Die hohe Dichtigkeit ist dabei auch im Hinblick darauf gerade bei Elektrozylindern von größter Bedeutung, weil im Innern des Zylinders üblicherweise das Wegsensorsystem zur Erfassung der aktuellen Auszugsposition der Kolbenstange untergebracht ist, welches beispielsweise einen offenliegenden Schleifkontakt umfasst, welcher die Auszugsposition der Kolbenstange präzise ermittelt. Im Falle von eingedrungenen - festen und/oder flüssigen - Verunreinigungen leiden derartige Wegsensoren jedoch Schaden, sei es infolge mechanischer Beeinträchtigung oder sei es infolge Korrosion, so dass die Positionserfassung ungenau oder gänzlich unwirksam wird, so dass sich Fehlfunktionen hinsichtlich der Dosierrate und/oder des Aufgabepunktes ergeben.

Entsprechendes gilt weitestgehend für den Fall von elektromotorischen Spindelantrieben der verlagerbaren Funktionsteile von gattungsgemäßen Verteilmaschinen, wie des Dosierschiebers des Dosierorgans oder der Einrichtung zur Verstellung des Aufgabepunktes des Verteilgutes auf das Verteilorgan, bei welchen die aus dem Motorgehäuse translatorisch ein- und ausfahrbare Spindel wiederum Gefahr läuft, partikuläre oder fluide Verunreinigungen in das Motorgehäuse einzutragen und den Elektromotor selbst oder dessen Sensoren zu beschädigen, wobei sich die genannten Verunreinigungen in dem spiralförmigen Spindelgewinde besonders hartnäckig ablagern und bei fortwährendem Betrieb praktisch nicht mehr gelöst werden können.

Ein derartiger, mit einem Getriebe versehener elektromotorischer Spindelantrieb eines drehbar gelagerten Dosierschiebers eines Dosierorgans eines Scheibenstreuers ist beispielsweise der DE 41 05 059 C2 zu entnehmen, wobei am freien Ende der translatorisch verlagerbare Spindel ein diese mit dem Dosierschieber verbindender Hebel angelenkt und dem elektromotorischen Spindelantrieb ein Positionserfassungssensor zugeordnet ist. Die EP 0 222 337 B1 beschreibt einen weiteren Scheibenstreuer mit einer unterhalb der Dosierorgane angeordneten, translatorisch verlagerbare Rutschen umfassenden Einrichtung zur Verstellung des Aufgabepunktes des Verteilgutes auf die Verteilorgane, welche zur Verringerung des sogenannten Masseneffektes in Abhängigkeit von dem mittels der Dosierorgane eingestellten Massenstrom an Verteilgut betätigt werden können. Während die Dosierorgane eine durch Anschluss an die Zapfwelle eines Traktors anschließbare rotationsangetriebene Dosierwalze aufweisen, stehen die Rutschen der Einrichtung zur Verlagerung des Aufgabepunktes wiederum über ein Hebelgestänge mit einem elektromotorischen Spindelantrieb in Verbindung.

Die EP 2 301 316 A1 beschreibt einen weiteren Zweischeibenstreuer, welcher Dosierorgane mit jeweils zwei separaten Dosierschiebern aufweist, deren Verstellung unabhängig voneinander es möglich macht, die Kontur der freien Dosieröffnung zu verändern und auf diese Weise das Streubild derart zu modifizieren, dass neben einem "normalen" Streubild ein steilflankiges Streubild erzielt werden kann, wie es beim Grenz- oder Randstreuen erwünscht ist. Das Dosierorgan kann einerseits eine Dosierplatte mit einer Dosieröffnung, andererseits einen Dosierschieber zum Verschließen der Dosieröffnung und zur Einstellung der Öffnungsweite der Dosieröffnung umfassen. Der Dosierschieber kann hierbei mittels einer ihm zugeordneten motorischen Stelleinrichtung um die Gelenkachse eines Gelenkbolzens, an welchem der Dosierschieber schwenkbar gelagert ist, in die jeweils gewünschte Position verstellt werden. An dem Schwenkbolzen ist ferner ein zweiter Dosierschieber schwenkbar gelagert, wobei zum Antrieb beider Dosierschieber Elektroaktoren vorgesehen sind.

Bei sämtlichen, durch die obigen Probleme ausgelösten Funktionsbeeinträchtigungen ergibt sich zwangsläufig ein Arbeitsstillstand der Verteilmaschine, welche in der Regel nicht in eine Art manuellen Notbetrieb versetzt werden kann. Nachdem gattungsgemäße Verteilmaschinen aber fast ausschließlich saisonal eingesetzt werden und für ihren notwendigen Einsatz üblicherweise ein nur kurzes Zeitfenster zur Verfügung steht (sei es im Falle einer saisonalen Düngung bei einem vorgegebenen Zustand der Bepflanzung oder sei es bei plötzlich auftretendem Schneefall), müssen derartige Ausfälle der Verteilmaschine so weit wie überhaupt möglich vermieden werden.

Als weiteres Problem der zur Betätigung des Dosierschiebers der Dosierorgane und/oder der Einrichtung zur Verstellung des Aufgabepunktes des Verteilgutes auf das Verteilorgan von gattungsgemäßen Verteilmaschinen verwendeten Elektrozylindern oder Spindelantrieben kommt hinzu, dass aufgrund zunehmender Größe (bzw. zunehmender Arbeitsbreiten) und zunehmenden Fahrgeschwindigkeiten sowie zunehmenden Automatisierungsprozessen immer höhere Einzugs- und Ausschubgeschwindigkeiten der Kolbenstange in den und aus dem Elektrozylinder bzw. der Verstellspindel in das bzw. aus dem Motorgehäuse erforderlich sind. Nachdem der Wirkungsgrad sowohl von Elektrozylindern als auch von Spindelantrieben aufgrund des für den üblicherweise reibungsintensiven Spindelantrieb erheblichen Kraftaufwandes gering ist, besteht folglich ein immer größerer Bedarf an zur Verfügung stehender elektrischer Leistung. Dies ist nicht nur im Hinblick auf einen hohen elektrischen Energieverbrauch von Nachteil, sondern insbesondere auch im Hinblick darauf, dass die Elektrozylinder bzw. Spindelantriebe gattungsgemäßer Verteilmaschinen in der Regel von dem Bordnetzsystem der Zugmaschine gespeist werden müssen, wobei sowohl in der Landtechnik als auch bei herkömmlichen Straßenfahrzeugen zumeist nur ein 12 V-Netz zur Verfügung steht. Handelt es sich bei der Verteilmaschine insbesondere um eine solche mit elektrischer bzw. elektronischer Steuerung und/oder Regelung mehrerer Funktionen der Verteilmaschine, so können bis zu sechs elektrische Stellantriebe (jeweils zwei für die Dosierorgane, die Einrichtungen zur Verstellung des Aufgabepunktes sowie für gegebenenfalls vorhandene Rührwerke) vorhanden sein, welche beim gleichzeitigen Betrieb gemeinsam mit der Steuer-/Regelelektronik selbst sowie mit einer dieser üblicherweise zugeordneten Bedieneinheit sehr hohe elektrische Leistungen erfordern. Dies kann zu sehr hohen Stromstärken bis hin zu einem Zusammenbruch des Bordnetzes bzw. zu einer Notabschaltung mittels der Sicherungen führen, so dass sich ein Bedarf an einer Erhöhung des schlechten Wirkungsgrades von elektrischen Stellzylindern bzw. elektrischen Spindelantrieben ergibt.

In Bezug auf die konstruktive Ausgestaltung von Einrichtungen zur Verstellung des Aufgabepunktes des Verteilgutes auf die Verteilerscheiben sind im Wesentlichen drei Ausführungsvarianten bekannt, welche
- eine drehbare Lagerung eines mit der Auslauföffnung aus dem Behälter versehenen Bodens;
- eine koaxial mit dem Verteilorgan drehbare Lagerung einer dem Dosierorgan nachgeordneten Hülse mit einer radialen Aufgabeöffnung auf das Verteilorgan; oder
- eine drehbare Lagerung einer dem Dosierorgan nachgeordneten Rutsche
umfassen.

Hinsichtlich der erstgenannten Alternative beschreibt beispielsweise die EP 2 057 876 A1 eine Verteilmaschine in Form eines Zweischeibenstreuers, dessen beiden Verteilerscheiben je eine Einrichtung zur Verstellung des Aufgabepunktes des Verteilgutes zugeordnet ist, welche je einen, mit je einer Auslauföffnung des Behälters versehenen drehbaren Boden umfasst. Die drehbaren Böden sind mittels je eines, getrennt voneinander betätigbaren Elektrozylinders oder mittels eines gemeinsamen Elektrozylinders und einem entsprechenden Hebelsystem angetrieben. Um die Elektrozylinder so weit wie möglich vor äußeren Einwirkungen, wie insbesondere Düngerkörner, zu schützen, sind sie etwa quer zur Fahrtrichtung der Verteilmaschine in einem zentralen Bereich zwischen den Verteilerscheiben und gegenüber deren Achsen in Fahrtrichtung nach vorne versetzt angeordnet, so dass sie weitgehend von Düngerpartikeln, welche von den Verteilerscheiben abgeschleudert werden, geschützt sind.

Dies gilt indes nur begrenzt für feinpulverigen Düngerstaub, welcher sich praktisch überall verteilt, sowie für Umgebungsverunreinigungen einschließlich Feuchtigkeit.

In Bezug auf die zweite Alternative ist z.B. der EP 1 145 814 B1 eine wiederum in Form eines Scheibenstreuers ausgestaltete Verteilmaschine zu entnehmen, welche eine unmittelbar oberhalb der Oberfläche der Verteilerscheibe angeordnete und koaxial mit dieser mittels eines Elektrozylinders drehbare Hülse umfasst. Das Verteilgut wird der Hülse mittels des Dosierorgans zugeführt und über eine radiale Aufgabeöffnung der Hülse auf die Oberfläche der Verteilerscheibe in deren zentralem Bereich aufgegeben. Je nach Drehposition der Hülse wird deren Aufgabeöffnung in Umfangsrichtung der Verteilerscheibe verlagert, so dass sich - in ähnlicher Weise wie bei der oben beschriebenen ersten Alternative - eine Verstellung des Aufgabepunktes in Umfangsrichtung der Verteilerscheibe ergibt.

In Bezug auf die dritte Alternative sind beispielsweise aus den EP 0 489 674 B1, EP 0 682 857 B1 oder EP 2 454 928 B1 Verteilmaschinen in Form von Scheibenstreuern bekannt, bei welchen das Verteilgut mittels des Dosierorgans einer drehbar gelagerten Rutsche oder Rinne aufgegeben wird. Durch Drehen der Rutsche mittels ihr zugeordneter Elektrozylinder wird deren freies Ende relativ zu der stationär gelagerten Verteilerscheibe verlagert, um den Aufgabepunkt des Verteilgutes auf die Verteilerscheibe - dort üblicherweise sowohl in Radial- als auch in Umfangsrichtung derselben - zu verstellen.

Der Erfindung liegt die Aufgabe zugrunde, eine Verteilmaschine der eingangs genannten Art auf einfache und kostengünstige Weise dahingehend weiterzubilden, dass unter zumindest weitestgehender Vermeidung der vorgenannten Nachteile auch unter Einwirkung von aggressiven pulver- oder partikelförmigen Stoffen einschließlich Feuchtigkeit bzw. Nässe bei extremen Witterungsbedingungen die Betriebssicherheit erhöht und vorzugsweise auch der Stromverbrauch gesenkt wird.

Erfindungsgemäß wird diese Aufgabe bei einer Verteilmaschine der eingangs genannten Art dadurch gelöst, dass wenigstens ein verlagerbares Funktionsteil
- des Dosierorgans in Form wenigstens eines Dosierschiebers und/oder
- wenigstens einer Einrichtung zur Verstellung des Aufgabepunktes des Verteilgutes auf das Verteilorgan
mit einer Abtriebswelle eines elektromotorischen Drehantriebs oder mit einer Getriebeabtriebswelle eines dem elektromotorischen Drehantrieb nachgeordneten Getriebes derart in Wirkverbindung steht und von dieser betätigt ist, dass die ausschließlich rotatorische Bewegung der Abtriebswelle oder der Getriebeabtriebswelle auf das verlagerbare Funktionsteil übertragbar ist.

Die erfindungsgemäße Ausgestaltung der Stellorgane des Dosierschiebers des Dosierorgans und/oder der Einrichtung zur Verstellung des Aufgabepunktes des Verteilgutes auf das Verteilorgan beseitigt zunächst sämtliche mit ineinander teleskopierbare Teile umfassenden Stellorganen (d.h. sowohl mit den oben beschriebenen Stellzylindern - seien sie hydraulisch oder seien sie elektrisch - als auch mit den Spindelantrieben, deren translatorische Hin- und Herbewegung auf das jeweilige Funktionsteil übertragen wird) verbundenen Problematiken hinsichtlich schädlicher Anbackungen von Verunreinigungen, wie Verteilgutpartikeln, Schmutz und/oder Feuchtigkeit, an deren Kolbenstange oder Verstellspindel, da die Abtriebswelle des erfindungsgemäßen elektromotorischen Drehantriebs axialfest angeordnet ist und unter Vermeidung von teleskopierenden Bewegungen keine translatorische, sondern ausschließlich eine rotatorische Bewegung durchführt, welche auf das verlagerbare Funktionsteil übertragen wird. Überdies erfolgt erfindungsgemäß insbesondere auch eine Übertragung der rein rotatorischen Bewegung bzw. des Drehmomentes der Abtriebswelle des elektromotorischen Drehantriebs oder der Getriebeabtriebswelle auf das - seinerseits rotatorisch oder auch translatorisch - verlagerbare Funktionsteil unter Vermeidung jeglicher translatorisch entlang von Kolben-/Zylindereinheiten oder Verstellspindeln verlagerbarer, ineinander teleskopierbarer Bewegungsübertragungsmittel.

Entsprechend ergibt sich auch eine einfache Abdichtung der Abtriebswelle gegenüber dem Elektromotor bzw. der Getriebeabtriebswelle eines Getriebegehäuses mittels herkömmlicher Dichtungen. Der elektromotorische Drehantrieb lässt sich mangels translatorisch hin und her bewegbarer Antriebsmittel überdies sehr kompakt und platzsparend ausbilden und eignet sich somit in idealer Weise für den sehr begrenzt zur Verfügung stehenden Bauraum unterhalb des zur Bevorratung des Streugutes dienenden Behälter von gattungsgemäßen Verteilmaschinen, wie insbesondere (Zwei)scheibenstreuern, wobei die Abtriebswelle beispielsweise lediglich einen Wellenstummel umfassen kann, dessen Rotationsbewegung bzw. dessen Drehmoment auf das jeweilige Funktionsteil übertragen wird.

Ferner ist der Kraftaufwand des elektromotorischen Drehantriebs mangels translatorisch hin und her bewegbarer und insbesondere teleskopierbarer Antriebsmittel gegenüber dem Stand der Technik deutlich geringer und folglich der Wirkungsgrad deutlich höher als jener von elektrischen Stellzylindern oder Verstellspindeln, so dass der Energieverbrauch gesenkt und zudem keine Gefahr einer Überlastung des Bordnetzes der Verteilmaschine selbst oder einer Zugmaschine, wie eines Traktors oder eines Straßenfahrzeugs, besteht. Dementsprechend ergibt sich auch infolge der geringeren notwendigen Antriebskräfte ein geringerer Verschleiß, was die Wartungsintervalle vermindert und insbesondere das Pannenrisiko während des saisonalen Einsatzes just zu dem Zeitpunkt, in welchem die Verteilmaschine benötigt wird, minimiert. Darüber hinaus lassen sich problemlos sehr hohe Stellgeschwindigkeiten erzielen, indem die Drehzahl des elektromotorischen Stellantriebs und folglich seiner Abtriebswelle erhöht wird, ohne dass dies von translatorischen Einzugs- und Ausschubbewegungen, wie sie bei einer Kolbenstange in Bezug auf einen Elektrozylinder oder einer Verstellspindel auftreten, beeinträchtigt werden könnte.

Um die ausschließlich rotatorische Bewegung der Abtriebswelle des elektromotorischen Drehantriebs oder der Getriebeabtriebswelle eines diesem nachgeordneten Getriebes unter Vermeidung jeglicher translatorisch entlang von Kolben-/Zylindereinheiten oder Verstellspindeln verlagerbarer Bewegungsübertragungsmittel auf das verlagerbare Funktionsteil zu übertragen, kann letzteres vorzugsweise
(a) mit wenigstens einem, exzentrisch an der Abtriebswelle des elektromotorischen Drehantriebs oder an der Getriebeabtriebswelle angelenkten Hebel,
(b) um eine koaxial zu der Abtriebswelle des elektromotorischen Drehantriebs oder zu der Getriebeabtriebswelle angeordnete Schwenkachse schwenkbar, drehfest mit der Abtriebswelle oder mit der Getriebeabtriebswelle, oder
(c) um eine unter radialem Abstand zu der Abtriebswelle des elektromotorischen Drehantriebs oder zu der Getriebeabtriebswelle angeordnete Schwenkachse schwenkbar, über kämmende Zahnräder oder einen Riementrieb, wie vorzugsweise in Form eines Zahnriementriebs, mit der Abtriebswelle oder der Getriebeabtriebswelle
in Verbindung stehen. In allen Fällen sind bei geringem Kraftübertragungsaufwand der rotatorischen Bewegung der Abtriebswelle oder der Getriebeabtriebswelle auf das verlagerbare Funktionsteil sehr hohe Verstellgeschwindigkeiten desselben möglich.

Das verlagerbare Funktionsteil der Verteilmaschine kann insbesondere dann, wenn es mit wenigstens einem exzentrisch an der Abtriebswelle des elektromotorischen Drehantriebs oder an der Getriebeabtriebswelle angelenkten Hebel in Verbindung steht, grundsätzlich translatorisch oder seinerseits rotatorisch verlagerbar sein. In vorteilhafter Ausgestaltung kann dabei vorgesehen sein, dass das verlagerbare Funktionsteil rotatorisch verlagerbar ist, indem es um eine Schwenk- oder Drehachse schwenkbar oder drehbar gelagert ist, welche z.B. mittels Hebeln, drehfester Verbindung mit der Abtriebs- oder Getriebeabtriebswelle, kämmender Zahnräder oder Riementriebe, vorzugsweise in Form von Zahnriementrieben, mit der Abtriebs- oder Getriebeabtriebswelle in Wirkverbindung steht und von dieser betätigt ist.

Wie bereits erwähnt, ist der elektromotorische Drehantrieb zweckmäßigerweise in wenigstens einem Gehäuse aufgenommen, um sämtlichen funktionalen Bestandteilen desselben einen größtmöglichen Schutz vor äußeren Einwirkungen zu bieten und insbesondere eine Korrosion infolge eines Eindringens von Feuchtigkeit sowie aggressiver Feinpartikel, wie während der Streu- bzw. Säarbeit umherfliegender Streu- bzw. Saatgutpartikel aus Mineraldünger oder Streusalz, zuverlässig zu verhindern. Dabei kann der elektromotorische Drehantrieb insbesondere in einem einzigen, gemeinsamen Gehäuse untergebracht oder können der Elektromotor sowie gegebenenfalls ein oder mehrere, diesem nachgeschaltete(s) Getriebe (siehe hierzu weiter unten) in separaten Gehäusen untergebracht sein, welche an dem Gehäuse des elektromotorischen Drehantriebs befestigt sind, um für einen allseitigen Verschluss der Komponenten des elektromotorischen Drehantriebs, gegebenenfalls gemeinsam mit dem Getriebe, zu sorgen. Das Gehäuse ist zu diesem Zweck insbesondere im Wesentlichen staub- und flüssigkeitsdicht ausgestaltet, wobei die Abtriebswelle des elektromotorischen Drehantriebs - bzw. eine Getriebeabtriebswelle eines diesem nachgeordneten Getriebes (siehe hierzu weiter unten) - insbesondere mittels wenigstens einer Gleitringdichtung, gegen das Gehäuse abgedichtet ist.

Wie zuvor erwähnt, kann in bevorzugter Ausgestaltung ferner vorgesehen sein, dass dem elektromotorischen Drehantrieb wenigstens ein Getriebe, insbesondere in Form eines Koppelgetriebes, Koaxialgetriebes, Winkelgetriebes und/oder Planetengetriebes, nachgeordnet ist, welches einerseits mit der Abtriebswelle des elektromotorischen Drehantriebs in Wirkverbindung steht, während dessen Getriebeabtriebswelle anderseits mit dem verlagerbaren Funktionsteil
- des Dosierorgans in Form des Dosierschiebers und/oder
- der Einrichtung zur Verstellung des Aufgabepunktes des Verteilgutes auf das Verteilorgan
in Wirkverbindung steht.
Aufgrund dessen, dass das Getriebe die Rotationsgeschwindigkeit der Abtriebswelle des elektromotorischen Drehantriebs auf eine (deutlich) geringere Rotationsgeschwindigkeit übersetzt, kann einerseits ein Elektromotor mit verhältnismäßig geringer Leistung zum Einsatz gelangen, andererseits lässt sich insbesondere eine höchst präzise Ansteuerung des Dosierschiebers des Dosierorgans und/oder der Einrichtung zur Verstellung des Aufgabepunktes des Verteilgutes auf das Verteilorgan sicherstellen, da mehrere Umdrehungen der Abtriebswelle des elektromotorischen Drehantriebs nur eine Teilumdrehung der Getriebeabtriebswelle bewirken. Der mit einer solchen, aus elektromotorischem Drehantrieb und nachgeschaltetem Getriebe gebildeten Antriebseinheit erzielbare Wirkungsgrad beträgt bei der erfindungsgenmäßen Übertragung der ausschließlich rotatorischen Bewegung der Abtriebswelle auf das verlagerbare Funktionsteil der Verteilmaschine in der Größenordnung von mindestens 40% oder mehr; das Gesamtübersetzungsverhältnis kann beispielsweise in der Größenordnung zwischen etwa 500 und etwa 2000, vorzugsweise zwischen etwa 750 und etwa 1500, insbesondere zwischen etwa 750 und etwa 1250, betragen. Geeignete Übersetzungsverhältnisse für das Getriebe betragen z.B. etwa 800 in Bezug auf die Betätigung des Dosierschiebers des Dosierorgans bzw. etwa 900 in Bezug auf die Betätigung der Einrichtung zur Verstellung des Aufgabepunktes des Verteilgutes auf das Verteilorgan. Die Auswahl der Art des ausgewählten Getriebes richtet sich vornehmlich nach dem bei gattungsgemäßen Verteilmaschinen unterhalb des Behälters nur sehr beschränkt zur Verfügung stehenden Bauraum, wobei sich für die Betätigung der Einrichtung zur Verstellung des Aufgabepunktes des Verteilgutes auf das Verteilorgan beispielsweise Planetengetriebe als zweckmäßig erwiesen haben, während für die Betätigung des Dosierschiebers des Dosierorgans insbesondere Koppel- oder Winkelgetriebe oder Kombinationen von Koppel- oder Winkel- mit Koaxialgetrieben als geeignet gefunden wurden. Wie oben in Bezug auf den elektromotorischen Drehantrieb erwähnt, sollte die Getriebeabtriebswelle zweckmäßigerweise, insbesondere mittels wenigstens einer Gleitringdichtung, gegen das insbesondere im Wesentlichen staub- und flüssigkeitsdichte Getriebegehäuse abgedichtet sein, um ein Eindringen von Feuchtigkeit und Schmutz, wie insbesondere Verteilgutfeinpartikeln, zu verhindern.

In weiterhin zweckmäßiger Ausgestaltung ist vorgesehen, dass die Abtriebswelle des elektromotorischen Drehantriebs, die - soweit vorhanden - Getriebeabtriebswelle oder wenigstens eine andere Welle des Getriebes mit einem Positionserfassungssensor, insbesondere in Form
- eines Winkelsensors, welcher die Winkelstellung der Abtriebswelle, der Getriebeabtriebswelle oder der wenigstens einen anderen Welle des Getriebes zu erfassen vermag, oder
- eines Drehzahlsensors, welcher die Anzahl an Umdrehungen der Abtriebswelle, der Getriebeabtriebswelle oder der wenigstens einen anderen Welle des Getriebes zu erfassen vermag,
versehen ist, welcher mit einer Steuer- und/oder Regeleinrichtung der Verteilmaschine in Verbindung steht. Während ein solcher Sensor grundsätzlich auch außerhalb des elektromotorischen Drehantriebs bzw. außerhalb des Getriebes, wie beispielsweise an dem hiermit betätigten Funktionsteil selbst, angeordnet sein kann, bietet die erfindungsgemäße Ausgestaltung mangels translatorisch verlagerbarer Kolbenstangen, wie sie z.B. bei Elektrozylindern vorhanden sind,

oder Verstellspindeln aufgrund ihrer sehr hohen Langzeitdichtigkeit insbesondere den Vorteil einer funktionssicheren Unterbringung des Sensors im Gehäuse des elektromotorischen Drehantriebs bzw. in dem diesem nachgeordneten oder gemeinsamen Getriebegehäuse, so dass die elektromotorische Antriebseinheit im Wesentlichen nach Art eines Servomotors, beispielsweise in Form eines bürstenlosen Gleichstrommotors, ausgestaltet sein kann. Der Positionserfassungssensor des elektromotorischen Drehantriebs dient dabei zur Erfassung der Ist-Stellung des hiermit betätigten Funktionsteils, insbesondere in Echtzeit, so dass die Soll-Stellung mittels der Steuer- und/oder Regeleinrichtung gegebenenfalls nachjustiert werden kann. Als Positionserfassungssensoren kommen praktisch beliebige bekannte Sensoren in Betracht, welche die Umdrehungszahl und/oder die Winkelposition von Wellen zu erfassen vermögen. Lediglich beispielhaft seien in diesem Zusammenhang Induktionsgeber, Reed-Sensoren, Magnetorestriktionssensoren und dergleichen erwähnt.

Die Steuer- und/oder Regeleinrichtung kann beispielsweise auch eine Steuerplatine umfassen, welche gleichfalls in dem dauerhaft dichten Gehäuse des elektromotorischen Drehantriebs oder auch in einem separaten Bedienmodul bzw. Bedienterminal untergebracht sein kann. Ihr kann in üblicher Weise zweckmäßig eine Eingabeeinrichtung zugeordnet sein, um die Steuer- und/oder Regeleinrichtung gemäß den gewünschten Einstellungen des Dosierschiebers des Dosierorgans und/oder des Aufgabepunktes des Verteilgutes auf das Verteilorgan zu befehligen. Die Eingabeeinrichtung kann z.B. im Führerhaus einer Zugmaschine, wie eines Traktors oder eines Straßenfahrzeugs, untergebracht oder von einem tragbaren Bedienterminal gebildet sein, um in üblicher Weise für die gewünschte Fernbedienbarkeit zu sorgen.

Während der elektromotorische Drehantrieb grundsätzlich auch eine eigene Stromversorgungseinrichtung, wie eine Batterie, einen Akkumulator oder dergleichen, aufweisen kann, kann er vorzugsweise von der elektrischen Stromversorgung einer Zugmaschine, wie eines Traktors oder eines Straßenfahrzeugs, mit Strom versorgt sein. In diesem Fall kann der elektromotorische Drehantrieb insbesondere eine elektrische Schnittstelle aufweisen, welche an die elektrische Stromversorgung der Zugmaschine anschließbar ist.

Im Hinblick auf ein verlagerbares Funktionsteil der Verteilmaschine in Form des Dosierschiebers des wenigstens einen Dosierorgans kann gemäß einer konstruktiv einfachen und robusten Ausgestaltung, welche sich zur Betätigung des Dosierschiebers des Dosierorgans mittels des erfindungsgemäßen motorischen Drehantriebs anbietet, in vorteilhafter Ausgestaltung vorgesehen sein, dass der Dosierschieber des wenigstens eines Dosierorgans mit der in einem Boden des Behälters angeordneten Auslauföffnung zusammenwirkt und zwischen einer Schließstellung, in welcher er die Auslauföffnung gänzlich verschließt, und einer Mehrzahl an Öffnungsstellungen, in welcher er die Auslauföffnung gänzlich oder teilweise freigibt, um eine, insbesondere im Wesentlichen vertikale, Schwenkachse schwenkbar ist.

Der Dosierschieber kann hierbei vorzugsweise schwenkbar an dem mit der Auslauföffnung versehenen, entweder feststehenden oder - im Falle einer Einrichtung zur Verstellung des Aufgabepunktes des Verteilgutes auf das Verteilorgan gemäß der oben beschriebenen ersten Alternative - drehbaren Boden des Behälters gelagert sein, wobei sich infolge der Lagerung des Dosierschiebers direkt an dem Boden auch eine sehr raumsparende Anordnung ergibt. Ferner kann es zu denselben Zwecken von Vorteil sein, wenn der elektromotorische Drehantrieb unmittelbar oder - sofern vorhanden - mittelbar über sein Getriebe an dem mit der Auslauföffnung versehenen Boden des Behälters festgelegt ist. Der elektromotorische Drehantrieb und das Getriebe, seien sie in einem gemeinsamen oder in separaten, aneinander befestigten Gehäusen untergebracht, können folglich gleichfalls direkt an dem Boden des Behälters festgelegt sein, wobei sich gleichfalls ein sehr geringer Raumbedarf sowie eine Anordnung sehr nahe an dem Dosierschieber ergibt, um die Anzahl an bewegbaren Teilen, welche die mittels des elektromotorischen Drehantriebs induzierte Rotationsbewegung mechanisch in eine Schwenkbewegung des Dosierschiebers übersetzen, so gering wie möglich zu halten.

In diesem Zusammenhang kann beispielsweise vorgesehen sein, dass die Abtriebswelle des elektromotorischen Drehantriebs oder - soweit vorhanden - die Getriebeabtriebswelle im Wesentlichen
- koaxial zu der Schwenkachse des Dosierschiebers angeordnet ist oder
- parallel zu der Schwenkachse des Dosierschiebers angeordnet ist, wobei die Abtriebswelle des elektromotorischen Drehantriebs oder die Getriebeabtriebswelle mittels wenigstens eines, insbesondere nur eines, hieran exzentrisch angelenkten Hebels mit dem Dosierschieber in Verbindung steht.
Während im erstgenannten Fall folglich bewegbare Teile zur mechanischen Übersetzung der Rotationsbewegung der Abtriebswelle des elektromotorischen Drehantriebs bzw. der Getriebeabtriebswelle in eine Schwenkbewegung des Dosierschiebers entbehrlich sind - vielmehr kann seine Drehachse unmittelbar drehfest, aber vorteilhaferweise lösbar, mit der (Getriebe)abtriebswelle verbunden sein, bietet die letztgenannte Alternative insbesondere bei einem sehr beengten Bauraum die Möglichkeit einer Anordnung des elektromotorischen Drehantriebs etwas weiter weg von der Schwenkachse des Dosierschiebers, erfordert aber gleichwohl lediglich, vorzugsweise nur einen einzigen, Hebel, welcher die Abtriebswelle des elektromotorischen Drehantriebs bzw. die Getriebeabtriebswelle schwenkbar mit dem Dosierschieber verbindet, wobei der Hebel jeweils exzentrisch in Bezug auf die (Getriebe)abtriebswelle sowie in Bezug auf die Schwenkachse des Dosierschiebers angelenkt ist, ohne dass hierfür translatorisch entlang von Kolben-/Zylindereinheiten oder Verstellspindeln verlagerbarer Bewegungsübertragungsmittel zum Einsatz gelangen.

Darüber hinaus kann gemäß einer vorteilhaften Weiterbildung vorgesehen sein, dass dem Dosierschieber eine Handhabe, insbesondere im Wesentlichen in Form eines an dem Dosierschieber exzentrisch zu seiner Schwenkachse anordbaren Bedienhebels, zugeordnet ist, um den Dosierschieber manuell betätigen zu können. Die Handhabe kann sich hierbei insbesondere vornehmlich etwa windschief in Bezug auf die Schwenkachse des Dosierschiebers, also mit hierzu senkrechter Erstreckungsrichtungskomponente sowie zu dieser versetzt, erstrecken und entweder fest an dem Dosierschieber angeordnet sein, oder an dem Dosierschieber kann insbesondere eine entsprechend positionierte Aufnahme, wie z.B. eine Bohrung, mit Bohrungen versehene Laschen oder dergleichen, vorgesehen sein, mit welcher die als separates Bedienteil ausgebildete Handhabe bedarfsweise in lösbaren Betätigungseingriff gebracht werden kann. Auf diese Weise ist es möglich, im Falle einer Störung des elektromotorischen Drehantriebs oder dessen Stromversorgung, z.B. dem Bordnetz einer Zugmaschine, den Dosierschieber manuell in seine Schließstellung zu versetzen, um einen Abtransport der Verteilmaschine zu gewährleisten, ohne dass noch in dem Behälter befindliches Verteilgut durch das Dosierorgan herausrieseln kann, was nicht nur sowohl wirtschaftliche als auch Umweltschäden zur Folge hätte, sondern insbesondere auch ein hohes Sicherheitsrisiko im Hinblick auf eine Rutschgefahr darstellte, wenn das Verteilgut bei den üblichen Erschütterungen und Vibrationen während der Fahrt auf öffentliche Straßen gelangte. Da die selbsthemmenden Kräfte üblicher elektromotorischer Drehantriebe im Vergleich mit (elektrischen) Kolben-/Zylindereinheiten geringer sind, muss der elektromotorische Drehantrieb hierzu nicht notwendigerweise von dem Dosierschieber entkoppelt werden, sondern lässt sich die Abtriebswelle in aller Regel mitbewegen.

Im Hinblick auf ein verlagerbares Funktionsteil einer vorteilhaferweise vorgesehenen Einrichtung zur Verstellung des Aufgabepunktes des Verteilgutes auf das Verteilorgan der Verteilmaschine bietet sich deren erfindungsgemäße Betätigung mittels des elektromotorischen Drehantriebs grundsätzlich für alle drei bislang bekannten Ausführungsvarianten der oben geschilderten Art an. So kann gemäß einer konstruktiv einfachen und robusten Ausgestaltung der Betätigung der Einrichtung zur Verstellung des Aufgabepunktes in vorteilhafter Ausgestaltung vorgesehen sein, dass das von dem elektromotorischen Drehantrieb betätigte verlagerbare Funktionsteil der wenigstens einen Einrichtung zur Verstellung des Aufgabepunktes des Verteilgutes auf das Verteilorgan
- einen mit der Auslauföffnung versehenen, drehbar gelagerten Bodens des Behälters umfasst, wobei dem drehbaren Boden insbesondere Widerlager zur mechanischen Begrenzung seines Verdrehwinkels zugeordnet sein können.
Die drehbare Lagerung des mit der Auslauföffnung versehenen Bodens des Behälters, welche sich insbesondere koaxial zu den in Form von Verteilerscheiben ausgebildeten Verteilorganen vollzieht, sorgt folglich für eine Verlagerung des Aufgabepunktes in Umfangsrichtung der Drehachse des Bodens bzw. in Umfangsrichtung von Verteilorganen in Form von mit Wurfflügeln ausgestatteten Verteilerscheiben, um den Streufächer je nach gewünschtem Streubild um die Drehachse des Bodens zu drehen. Die gegebenenfalls vorhandenen Widerlager können beispielsweise von einem an einem stationären Teil ausgebildeten Langlöchern gebildet sein, in welchem sich ein oder mehrere an dem drehbaren Boden unmittelbar oder mittelbar starr festgelegte(r) Stift(e) im Eingriff befinden und in den Endpositionen an die Enden des Langloches anstoßen. Alternativ kann zwecks einer ähnlichen Verlagerung des Aufgabepunktes in Umfangsrichtung der Verteilerscheiben vorgesehen sein, dass das von dem elektromotorischen Drehantrieb betätigte verlagerbare Funktionsteil der wenigstens einen Einrichtung zur Verstellung des Aufgabepunktes auf das Verteilorgan
- eine dem Dosierorgan nachgeordnete, koaxial mit dem Verteilorgan drehbar gelagerte Hülse umfasst, welche oberhalb der Oberfläche des Verteilorgans angeordnet ist und eine radiale Aufgabeöffnung auf das Verteilorgan aufweist.
Durch Drehen der Hülse mittels des elektromotorischen Drehantriebs und folglich Drehen deren Aufgabeöffnung koaxial zu der Verteilerscheibe ergibt sich folglich wiederum eine umfängliche Verlagerung des Aufgabepunktes. Zwecks einer Verlagerung des Aufgabepunktes in Radial- und/oder in Umfangsrichtung der Verteilerscheiben kann schließlich alternativ vorgesehen sein, dass das von dem elektromotorischen Drehantrieb betätigte verlagerbare Funktionsteil der wenigstens einen Einrichtung zur Verstellung des Aufgabepunktes auf das Verteilorgan
- eine dem Dosierorgan nachgeordnete, verlagerbare, insbesondere drehbare gelagerte, Rutsche oder Rinne umfasst,
welche wiederum mittels des elektromotorischen Drehantriebs derart betätigt ist, dass die ausschließlich rotatorische Bewegung seiner Abtriebswelle oder seiner Getriebeabtriebswelle auf die - translatorisch oder rotatorisch - verlagerbare Rutsche oder Rinne übertragen wird.

Zur konstruktiv einfachen und robusten Übertragung der mittels des erfindungsgemäßen Drehantriebs induzierten Rotationsbewegung seiner Abtriebswelle bzw. - sofern vorhanden - der Getriebeabtriebswelle auf eine Schwenkbewegung des drehbaren Bodens oder der drehbaren Hülse oder auf eine translatorische oder rotatorische Bewegung der verlagerbaren Rutsche bzw. Rinne der Einrichtung zur Verstellung des Aufgabepunktes des Verteilgutes auf das Verteilorgan kann vorzugsweise vorgesehen sein, dass
- an dem mit der Auslauföffnung versehenen drehbaren Boden, an der mit der Aufgabeöffnung versehenen drehbaren Hülse, oder
- an der verlagerbaren Rutsche bzw. Rinne
wenigstens ein Hebel exzentrisch angelenkt ist, welcher direkt oder gegebenenfalls über wenigstens einen weiteren Hebel exzentrisch an der Abtriebs-welle des elektromotorischen Drehantriebs oder an der Getriebeabtriebswelle angelenkt ist. Mittels eines solchen Hebels oder eines solchen, mehrere Hebel umfassenden Hebelgestänges lässt sich folglich die ausschließlich rotatorische Bewegung der Abtriebswelle des elektromotorischen Drehantriebs oder der Getriebeabtriebswelle unter Vermeidung jeglicher translatorisch entlang von Kolben-/Zylindereinheiten oder Verstellspindeln verlagerbarer Bewegungsübertragungsmittel in eine translatorische oder rotatorische Bewegung des Funktionsteils der Einrichtung zur Verstellung des Aufgabepunktes übertragen.

Sofern das Funktionsteil der Einrichtung zur Verstellung des Aufgabepunktes des Verteilgutes auf das Verteilorgan seinerseits rotatorisch verlagerbar und folglich um eine Achse dreh- bzw. schwenkbar gelagert ist, kann zur Übertragung der ausschließlich rotatorischen Bewegung der Abtriebswelle des elektromotorischen Drehantriebs oder der Getriebeabtriebswelle auf das Funktionsteil unter Vermeidung jeglicher translatorisch entlang von Kolben-/Zylindereinheiten oder Verstellspindeln verlagerbarer Bewegungsübertragungsmittel alternativ oder zusätzlich vorgesehen sein, dass
- der mit der Auslauföffnung versehene drehbare Boden,
- die mit der Aufgabeöffnung versehene drehbare Hülse, oder die drehbar gelagerte Rutsche bzw. Rinne
mittels kämmender Zahnräder oder mittels eines Riementriebs, vorzugsweise in Form eines Zahnriementriebs, mit der Abtriebswelle des elektromotorischen Drehantriebs oder mit der Getriebeabtriebswelle in Verbindung steht.

Die Abtriebswelle des elektromotorischen Drehantriebs oder
- sofern vorhanden - die Getriebeabtriebswelle können hierbei beispielsweise im Wesentlichen parallel zur Drehachse
- des mit der Auslauföffnung versehenen drehbaren Bodens, der mit der Aufgabeöffnung versehenen drehbaren Hülse,
oder
- der auf das Verteilorgan mündenden drehbaren Rutsche bzw. Rinne
angeordnet sein, was z.B. die vorteilhaften Möglichkeiten eröffnet, sie mittels nur eines Hebels, wie im Wesentlichen in Form einer Lenkerstange, oder mittels nur eines Riementriebs, funktionssicher und platzsparend schwenkbar miteinander zu verbinden.

Ferner kann der zur Betätigung des Funktionsteils der Einrichtung zur Verstellung des Aufgabepunktes des Verteilgutes auf das Verteilorgan vorgesehene elektromotorische Drehantrieb einschließlich des ihm gegebenenfalls zugeordneten Getriebes vorteilhafterweise
- im zentralen Bereich der Verteilmaschine und/oder
- oberhalb des wenigstens einen, seine Abtriebswelle oder die Getriebeabtriebswelle mit dem drehbaren Boden, mit der drehbaren Hülse oder mit der verlagerbaren, insbesondere drehbaren, Rutsche bzw. Rinne verbindenden Hebels
angeordnet sein, um ihn einerseits möglichst geschützt vor umherfliegenden Verteilgutpartikeln zu positionieren und ihn andererseits aus Platzgründen von den Dosier- und Verteilorganen einschließlich deren Antriebe zu beabstanden.

Sofern die Verteilmaschine zwei oder mehrere Verteilorgane umfasst und beispielsweise nach Art eines Zwei- oder Mehrscheibenstreuers ausgebildet ist, so kann beispielsweise vorgesehen sein, dass die Verteilmaschine wenigstens zwei, insbesondere genau zwei, am Boden des Behälters angeordnete Auslauföffnungen aufweist, welchen jeweils ein Dosierorgan sowie jeweils ein dem Dosierorgan nachgeordnetes Verteilorgan zum Verteilen des Verteilgutes auf dem Boden nachgeordnet ist, wobei das von dem elektromotorischen Drehantrieb betätigte verlagerbare Funktionsteil einer jeweiligen Einrichtung zur Verstellung des Aufgabepunktes des Verteilgutes auf das Verteilorgan jeweils
- einen mit einer jeweiligen Auslauföffnung versehenen, drehbar gelagerten Bodens des Behälters, oder
- eine einem jeweiligen Dosierorgan nachgeordnete, mit der Aufgabeöffnung versehene, drehbar gelagerte Hülse, oder
- eine einem jeweiligen Dosierorgan nachgeordnete, verlagerbare, insbesondere drehbar gelagerte, Rutsche bzw. Rinne
umfasst. An jedem drehbaren Boden, an jeder drehbaren Hülse oder an jeder verlagerbaren, vorzugsweise drehbaren, Rutsche bzw. Rinne kann dabei beispielsweise wenigstens ein Hebel exzentrisch angelenkt sein, welcher direkt oder über wenigstens einen weiteren Hebel exzentrisch an der Abtriebswelle wenigstens eines elektromotorischen Drehantriebs oder wenigstens einer Getriebeabtriebswelle angelenkt ist, um die ausschließlich rotatorische Drehbewegung der Abtriebswelle des elektromotorischen Drehantriebs oder dessen Getriebeabtriebswelle unter Vermeidung jeglicher translatorisch entlang von Kolben-/Zylindereinheiten oder Verstellspindeln verlagerbarer Bewegungsübertragungsmittel. auf das jeweilige Funktionsteil zu übertragen.

Bei einer solchen, insbesondere nach Art eines Zweischeibenstreuers ausgestalteten, Verteilmaschine ist es beispielsweise denkbar, dass
- jeder drehbare Boden, jede drehbare Hülse oder jede drehbare Rutsche bzw. Rinne, insbesondere mittels des wenigstens einen Hebels, mit einem eigenen elektromotorischen Drehantrieb in Verbindung steht, um den Aufgabepunkt durch Drehen eines jeweiligen Bodens, einer jeweiligen Hülse oder eine jeweiligen Rutsche bzw. Rinne unabhängig voneinander zu verstellen; oder
- zumindest zwei drehbare Böden, zwei drehbare Hülsen oder zwei drehbare Rutschen bzw. Rinnen, insbesondere mittels je wenigstens eines Hebels, mit einem gemeinsamen elektromotorischen Drehantrieb in Verbindung stehen, um den Aufgabepunkt durch gemeinsames Drehen der Böden, der Hülsen oder der Rutschen bzw. Rinnen gleichzeitig zu verstellen.
In Bezug auf eine mögliche konstruktive Ausgestaltung des Hebelgestänges bei letzterer Alternative sei beispielhaft auf die eingangs zitierte EP 2 057 876 A1 verwiesen.

Weitere Merkmale und Vorteile der Erfindung ergeben sich aus der nachfolgenden Beschreibung von Ausführungsbeispielen unter Bezugnahme auf die Zeichnungen. Dabei zeigen:
- Fig. 1: eine schematische perspektivische Ansicht einer in Form eines landwirtschaftlichen Zweischeibenstreuers ausgebildeten Verteilmaschine von schräg hinten;
- Fig. 2: eine schematische perspektivische Detailansicht eines Teils des unterhalb des Behälters der Verteilmaschine gemäß Fig. 1 angeordneten Tragrahmens einschließlich der Dosierorgane, der Verteilorgane und den Einrichtungen zur Verstellung des Aufgabepunktes des Verteilgutes auf die Verteilorgane;
- Fig. 3: eine schematische perspektivische Detailansicht eines Dosierorgans der Verteilmaschine gemäß Fig. 1 mit einer ersten Ausführungsvariante eines Antriebsmechanismus' des Dosierschiebers;
- Fig. 4: eine schematische perspektivische Detailansicht eines Dosierorgans der Verteilmaschine gemäß Fig. 1 mit einer zweiten Ausführungsvariante eines Antriebsmechanismus' des Dosierschiebers;
- Fig. 5: eine schematische perspektivische Detailansicht eines Dosierorgans der Verteilmaschine gemäß Fig. 1 mit einer dritten Ausführungsvariante eines Antriebsmechanismus' des Dosierschiebers;
- Fig. 6: eine schematische Schnittansicht einer Ausführungsform eines elektromotorischen Drehantriebs einschließlich diesem nachgeordneten Getriebe des Dosierorgans gemäß Fig. 3 und 4;
- Fig. 7: eine der Fig. 6 entsprechende Schnittansicht einer demgegenüber geringfügig abgewandelten Ausführungsform eines elektromotorischen Drehantriebs einschließlich diesem nachgeordneten Getriebe des Dosierorgans gemäß Fig. 3 und 4;
- Fig. 8: eine schematische Schnittansicht einer Ausführungsform eines elektromotorischen Drehantriebs einschließlich diesem nachgeordneten Getriebe des Dosierorgans gemäß Fig. 5 entsprechend der Schnittebene B-B der Fig. 9;
- Fig. 9: eine schematische Schnittansicht des elektromotorischen Drehantriebs einschließlich Getriebe gemäß Fig. 8 entsprechend der Schnittebene A-A der Fig. 8; und
- Fig. 10: eine schematische Schnittansicht des elektromotorischen Drehantriebs einschließlich Getriebe gemäß Fig. 8 und 9 entsprechend der Schnittebene C-C der Fig. 9.

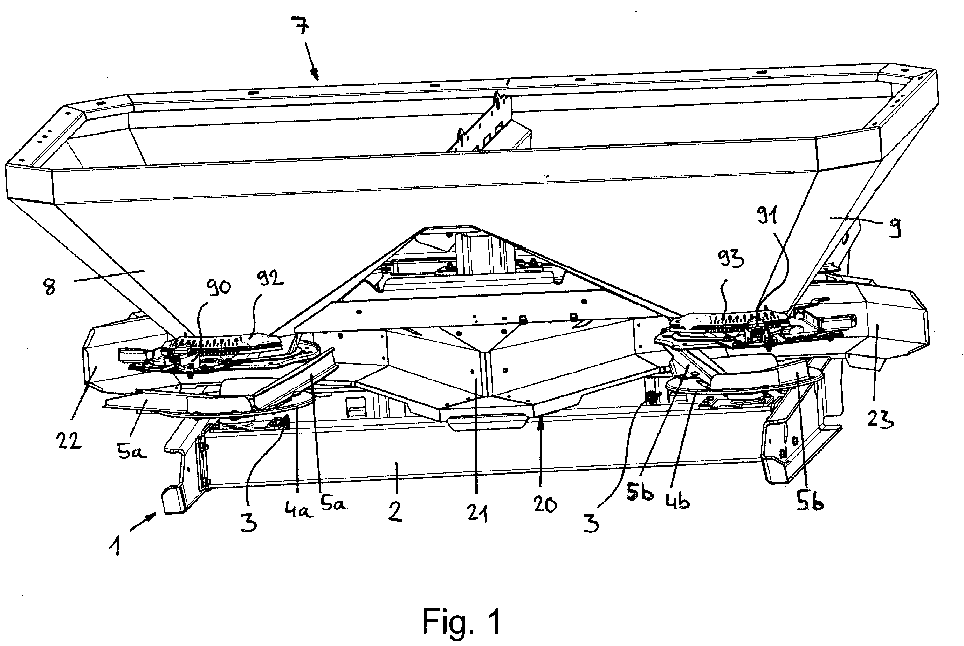

Die in Fig. 1 wiedergegebene Verteilmaschine in Form eines Zweischeibenstreuers für landwirtschaftliche Zwecke weist einen Rahmen 1 mit einer Quertraverse 2 auf, welche im Falle eines von der Zapfwelle einer Zugmaschine, wie eines Traktors, abgeleiteten mechanischen Antriebs der Verteilorgane 3 einen Quertrieb aufnimmt, während im Falle eines drehzahlregelbaren hydraulischen oder insbesondere elektrischen Antriebs (nicht gezeigt) die einem jeden Verteilorgan 3 zugeordneten Hydraulik- bzw. Elektromotoren an der Quertraverse 2 festgelegt sein können. Die Verteilorgane 3 sind in Form von Verteilerscheiben 4a, 4b ausgebildet, welche in üblicher Weise mit Wurfflügeln 5a, 5b bestückt sind.

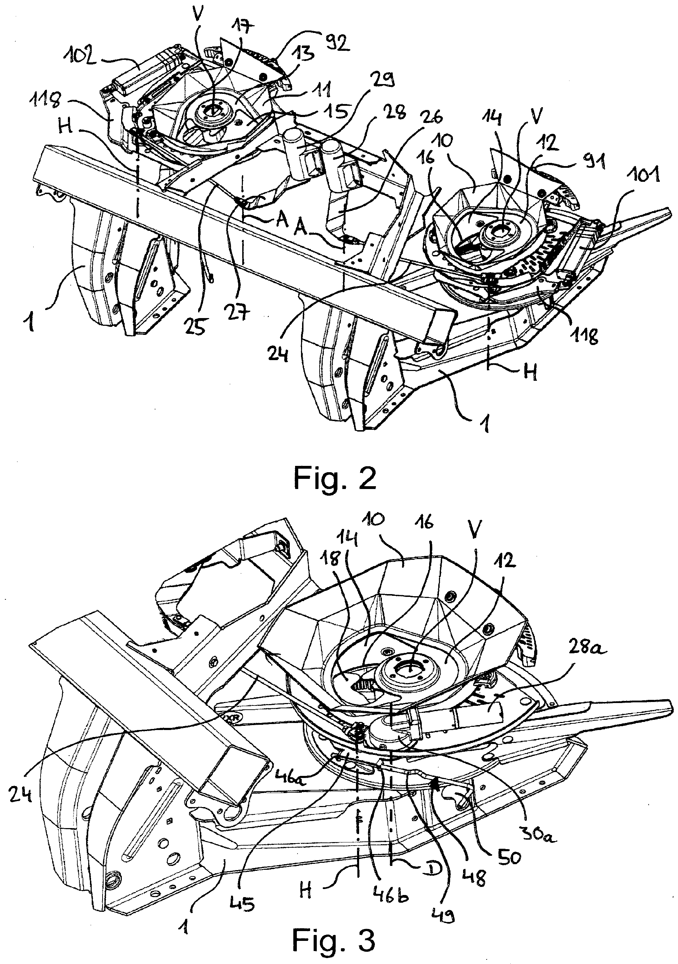

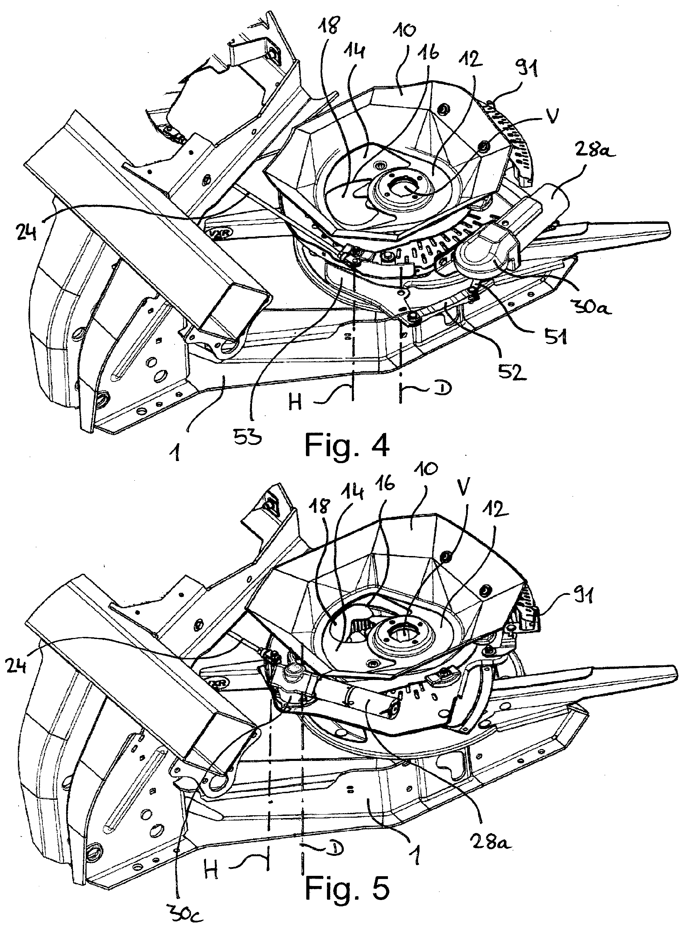

Die Verteilmaschine weist ferner einen zur Bevorratung des Verteilgutes, wie insbesondere Dünger oder Saatgut, dienenden Behälter 7 auf, welcher im vorliegenden Fall zwei sich etwa trichterförmig nach unten verjüngende Behälterteile 8, 9 umfasst, welche am unteren Ende jeweils in ein z.B. im Wesentlichen polygonal geformtes Unterteil 10, 11 mit einem Bodenring 12, 13 übergeben (vgl. Fig. 2 bis 5). Unmittelbar unterhalb eines jeweiligen Bodenrings 12, 13 ist jeweils ein Boden 14, 15 mit einer Auslauf- bzw. Dosieröffnung 16, 17 angeordnet (vgl. wiederum Fig. 2 bis 5), deren freier Querschnitt mittels eines am besten in den Fig. 3 bis 5 erkennbaren - hier rotatorisch - verlagerbaren Funktionsteils in Form eines Dosierschiebers 18 eines Dosierorgans zur Einstellung des gewünschten Massenstromes an Verteilgut zwischen einer Schließstellung (Fig. 4) und einer gänzlichen Öffnungsstellung (Fig. 2) sowie beliebigen teilweisen Öffnungsstellungen (Fig. 2 und 5) elektromotorisch auf- und zusteuerbar ist. Der mit einer jeweiligen Auslauföffnung 16, 17 zusammenwirkende Dosierschieber 18 befindet sich dabei wiederum unmittelbar unterhalb eines jeweiligen, mit der Auslauföffnung 16, 17 versehenen Bodens 14, 15 und ist hieran um eine etwa vertikale Achse D (vgl. Fig. 3 bis 5) schwenkbar gelagert.

Wie wiederum aus der Fig. 1 hervorgeht, kann die Verteilmaschine ferner mit einem Verteilerscheibenschutz 20 ausgestattet sein, welcher die Verteilerscheiben 4a, 4b mit den Wurfflügeln 5a, 5b teilweise umgibt. Er besteht im vorliegenden Fall aus mehreren miteinander verbundenen Blechabschnitten, von welchen ein mittlerer Abschnitt 21 zwischen den Verteilerscheiben 4a, 4b und den Behälterteilen 8, 9, insbesondere dessen Unterteilen 10, 11, angeordnet ist und je ein weiterer bogenförmiger Abschnitt 22, 23 die Verteilerscheiben 4a, 4b in ihrem - in Fahrtrichtung betrachtet - vorderen Bereich umgeben.

Wie der Fig. 2 zu entnehmen ist, ist einem jeweiligen Verteilorgan 3 in Form der Verteilerscheiben 4a, 4b eine Einrichtung zur Verstellung des Aufgabepunktes des Verteilgutes auf dieselbe zugeordnet, welche als - hier rotatorisch - verlagerbares Funktionsteil einen jeweiligen, mit der Auslauföffnung 16, 17 versehenen und drehbar gelagerten Bodens 14, 15 der Behälterteile 8, 9 des Behälters 7 umfasst. Die im Übrigen nicht im Einzelnen dargestellte drehbare Lagerung des Bodens 14, 15 erfolgt im vorliegenden Fall koaxial zur im Wesentlichen senkrechten Drehachse V der Verteilerscheiben 4a, 4b, so dass die Dosier- bzw. Auslauföffnung 16, 17 entlang einer Kreisbahn um einen Umfangsabschnitt um die Verteilerscheibe 4a, 4b herum verlagert werden kann, wodurch der Aufgabepunkt in Umfangsrichtung der Verteilerscheibe 4a, 4b verstellbar ist. Zur Betätigung eines jeweiligen drehbaren Bodens 14, 15 unabhängig voneinander - d.h. der Aufgabepunkt auf eine jeweilige Verteilerscheibe 4a, 4b lässt sich unabhängig voneinander verändern - ist an den drehbaren Böden 14, 15 je ein Hebel 24, 25 in Bezug auf die Drehachse V des Bodens 14, 15 exzentrisch angelenkt, und zwar um eine sich etwa parallel zur Drehachse V des Bodens 14, 15, also wiederum etwa vertikal, erstreckende Achse H. Die Hebel 24, 25 sind im vorliegenden Fall im Wesentlichen in Form von Lenkerstangen ausgestaltet und erstrecken sich von ihrer Lagerung an dem jeweiligen drehbaren Boden 14, 15 an der Achse H vornehmlich nach innen in Richtung des Zentrums. An ihrem einem jeweiligen drehbaren Boden 14, 15 abgewandten Ende sind die Hebel 24, 25 an je einem weiteren Hebel 26, 27 schwenkbar gelagert, und zwar wiederum um eine etwa vertikale Achse A.

Jeder weitere Hebel 26, 27 sitzt drehfest auf je einer in der Fig. 2 nicht erkennbaren, axialfesten Getriebeabtriebswelle je eines gleichfalls in der Fig. 2 nicht erkennbaren Getriebes und erstreckt sich hiervon in Radialrichtung - sowie im vorliegenden Fall auch schräg nach unten - fort, so dass die zur Lagerung des Hebels 24, 25 an dem weiteren Hebel 26, 27 dienende Achse A exzentrisch in Bezug auf die Getriebeabtriebswelle angeordnet ist. Ein jedes Getriebe ist wiederum je einem elektromotorischen Drehantrieb 28, 29 nachgeordnet, welcher einen Elektromotor aufweist, dessen gleichfalls axialfeste Abtriebswelle (in Fig. 2 nicht erkennbar) mit einer Getriebeeingangswelle eines jeweiligen Getriebes in Verbindung steht. Das jeweilige Getriebe ist dabei z.B. unterhalb eines jeweiligen elektromotorischen Drehäntriebs 28, 29 angeordnet und teilt sich mit letzterem ein gemeinsames Gehäuse, wobei die einen jeweiligen weiteren Hebel 26, 27 tragende Getriebeabtriebswelle, z.B. mittels einer Gleitringdichtung, gegen das Gehäuse abgedichtet ist. Bei dem Getriebe kann es sich beispielsweise um ein Planetengetriebe handeln, welches ein auf der Abtriebswelle des elektromotorischen Drehantriebs 28, 29 sitzendes Sonnenrad mit kleinem Durchmesser umfasst, das mit einem auf der Getriebeabtriebswelle sitzenden Planetenrad mit demgegenüber großem Durchmesser im Eingriff steht, wobei die Abtriebswelle des elektromotorischen Drehantriebs 28, 29 und die Getriebeabtriebswelle insbesondere etwa parallel angeordnet sind, so dass sich eine parallele Anordnung der Getriebeabtriebswelle in Bezug auf die Drehachse V des drehbaren Bodens sowie auf die Achsen A, H des Hebels 24, 25 ergibt. Die elektromotorischen Drehantriebe 28, 29 einschließlich ihrer Getriebe und der Hebel 24, 26; 25, 27 sind dabei im Wesentlichen im Zentrum der Verteilmaschine zwischen den Verteilorganen angeordnet, so dass sie - von hinten entsprechend der Ansicht gemäß Fig. 1 betrachtet - hinter dem Wurfscheibenschutz 21 mit seinem Mittelabschnitt 19 und damit geschützt vor Staub und Partikeln des von den Verteilerscheiben 4a, 4b fort geschleuderten Verteilgutes positioniert sind. Mittels der Hebel 24, 26; 25, 27 wird folglich die ausschließlich rotatorische Bewegung der Getriebeabtriebswelle auf die als drehbare Böden 14, 15 ausgestalteten Funktionsteile der Einrichtung zur Verstellung des Aufgabepunktes übertragen, ohne dass etwaige Linearantriebe, wie Verstellspindeln oder insbesondere Kolben-/Zylindereinheiten, zum Einsatz gelangen. Anstelle der Hebel 24, 26; 25, 27 ist es beispielsweise auch denkbar, einen Riementrieb, wie einen Keil- oder insbesondere Zahnriementrieb, oder kämmende Zahnräder (oder beispielsweise auch nur je ein auf einer jeweiligen Getriebeabtriebswelle sitzendes Zahnrad, welches mit einer hierzu komplementären Verzahnung an einem Umfangsabschnitt eines jeweiligen drehbaren Bodens 14, 15 im Eingriff steht) vorzusehen, welche die Getriebeabtriebswelle mit der Drehachse V der drehbaren Böden 14, 15 der Einrichtung zur Verstellung des Aufgabepunktes wirkverbinden (nicht gezeigt).

Wie weiter unten in Bezug auf die elektromotorischen Drehantriebe der Verteilorgane noch näher erläutert, sind auch die elektromotorischen Drehantriebe 28, 29 der Einrichtung zur Verstellung des Aufgabepunktes des Verteilgutes auf eine jeweilige Verteilerscheibe 4a, 4b nach Art von Servomotoren mit Positionserfassungssensoren (in Fig. 2 nicht gezeigt) versehen, welche den genauen Drehwinkel und/oder die Anzahl an Umdrehungen der Abtriebswelle, der Getriebeabtriebswelle oder einer anderen Welle des Getriebes erfassen. Die Sensoren stehen wiederum mit einer Steuer- und/ oder Regeleinrichtung der Verteilmaschine in Wirkverbindung, um den Aufgabepunkt je nach dem gewünschten Streubild sowie in Abhängigkeit der, beispielsweise mittels GPS erfassten, Position der Verteilmaschine auf dem Feld während der Streuarbeit zu steuern und/oder zu regeln. Im Übrigen können die elektromotorischen Drehantriebe 28, 29 sowie auch der elektromotorische Drehantrieb 28a des Dosierorgans (vgl. hierzu weiter unten) beispielsweise bürstenlose DC-Motoren umfassen.

Während der um eine etwa senkrechte Achse D verschwenkbare Dosierschieber 118 des Dosierorgans bei der in der Fig. 2 wiedergegebenen Ausführungsform in herkömmlicher Weise mittels eines Elektrozylinders 101, 102, dessen Kolbenstange einerseits an dem Dosierschieber 118 und dessen Zylinder andererseits an dem drehbaren Boden 14, 15 der Verteilmaschine angelenkt ist, zwischen einer Schließstellung und seinen Öffnungsstellungen betätigt ist, sind den Fig. 3 bis 5 verschiedene Ausführungsvarianten von Antriebsmechanismen des Dosierschiebers 18 zu entnehmen, welche gleichfalls von einem erfindungsgemäßen elektromotorischen Drehantrieb Gebrauch machen.

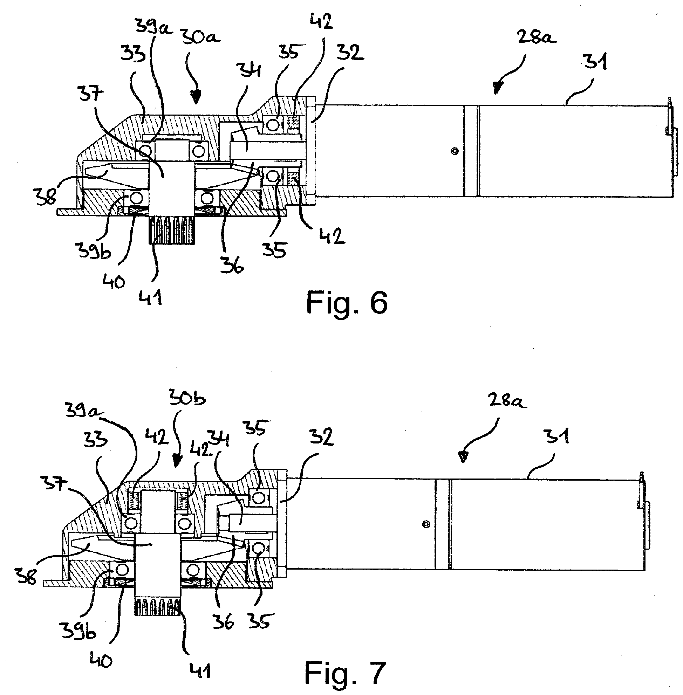

So geht aus der Fig. 3 hervor, dass der um die Schwenkachse D verschwenkbare Dosierschieber 18 des Dosierorgans mittels eines elektromotorischen Drehantriebs 28a mit einem diesem nachgeordneten Getriebe 30a, dessen Gehäuse außerhalb des Unterteils 10 des Behälterteils 8 des Behälters 7 (vgl. Fig. 1) an dem drehbaren Boden 10 festgelegt ist, zwischen seiner Schließstellung und einer beliebigen, gänzlichen oder teilweisen Öffnungsstellung betätigt ist. Bei der in der Fig. 3 gezeigten Ausführungsvariante ist das Getriebe 30a von einem nur einen geringen Bauraum erfordernden Winkelgetriebe gebildet, dessen Getriebeabtriebswelle 37 (siehe Fig. 6 und 7; in Fig. 3 nicht erkennbar) koaxial zur Schwenkachse D des Dosierschiebers 18 angeordnet ist.

In den Fig. 6 und 7 sind mögliche Ausführungsvarianten des elektromotorischen Drehantriebs 28a einschließlich dessen Getriebe 30a wiedergegeben. Der elektromotorische Drehantrieb 28a weist dabei einen in einem Gehäuse 31 aufgenommenen Elektromotor auf, wobei das Gehäuse 31 einen Gehäuseflansch 32 umfasst, an welchem das Getriebegehäuse 33 des Getriebes 30a staub- und flüssigkeitsdicht festgelegt ist. Eine Abtriebswelle 34 des elektromotorischen Drehantriebs 28a durchsetzt den Gehäuseflansch 32 und ragt somit ins Innere des Getriebegehäuses 33 hinein, wo sie mittels Wälzlagern 35 gelagert ist. Im Bereich des freien Endes der Abtriebswelle 34 sitzt drehfest ein Kegelrad 36 mit kleinem Durchmesser, welches mit einem drehfest auf der - hier unter einem Winkel von etwa 90° in Bezug auf die Abtriebswelle 34 angeordneten - Getriebeabtriebswelle 37 sitzenden Kegelrad 38 mit demgegenüber großen Durchmesser in kämmendem Eingriff steht. Die gleichfalls mittels Wälzlagern 39a, 39b in dem Getriebegehäuse 33 gelagerte Getriebeabtriebswelle 37 durchsetzt das Getriebegehäuse 33 und ist gegen letzteres mittels einer Gleitringdichtung 40 staub- und flüssigkeitsdicht abgedichtet. An ihrem freien Ende ist die Getriebeabtriebswelle 37 mit einer geeigneten Profilierung 41 versehen, mittels welcher sie drehfest mit der Schwenkachse D des Dosierschiebers 18 des Dosierorgans (vgl. Fig. 3) verbunden werden kann. In dem Getriebegehäuse 33 ist ferner ein Positionserfassungssensor 42 untergebracht, welcher in der Ausführungsvariante gemäß Fig. 6 am Umfang der Abtriebswelle 34 des elektromotorischen Drehantriebs 28a angeordnet ist und beispielsweise Induktionsgeber umfasst, welche nach Art eines Winkelsensors die genaue Winkelstellung der Abtriebswelle 34 bzw. - unter Berücksichtigung des Untersetzungsverhältnisses des Getriebes 33 - des drehfest mit der Getriebeabtriebswelle 37 verbindbaren Dosierschiebers 18 zu erfassen vermag. Der Positionserfassungssensor 42 steht gleichfalls mit der Steuer- und/oder Regeleinrichtung der Verteilmaschine in Wirkverbindung, um die gewünschte Dosiermengen einzustellen sowie insbesondere anhand des gleichfalls sensorisch erfassten Ist-Massenstromes an Verteilgut (nicht gezeigt) zu regeln.

Die demgegenüber geringfügig abgewandelte Ausführungsvariante des elektromotorischen Drehantriebs 28a einschließlich dessen Getriebe 30b gemäß Fig. 7 unterscheidet sich von jener der Fig. 6 vornehmlich durch die Anordnung des Positionserfassungssensors 42, welcher hier an der Abtriebswelle 34 des elektromotorischen Drehantriebs 28a, sondern direkt am Umfang der Getriebeabtriebswelle 37 angeordnet ist, so dass die von ihm erfasste Winkelposition unmittelbar jener des Dosierschiebers 18 des Dosierorgans entspricht. Im Übrigen sind identische und funktionsgleiche Bauteile mit denselben Bezugszeichen versehen wie in der Fig. 6.

Der elektromotorische Drehantrieb 28a sowie der Positionserfassungssensor 42 können - ebenso wie die elektromotorischen Drehantriebe 28, 29 und deren Positionserfassungssensoren der Einrichtung zur Verstellung des Aufgabepunktes des Verteilgutes auf die Verteilorgane gemäß Fig. 2 - zweckmäßigerweise über eine an der Verteilmaschine selbst oder an einer Zugmaschine, wie z.B. einem Traktor, vorgesehene elektrische Schnittstelle (nicht gezeigt) an die Stromversorgung der Zugmaschine anschließbar sein, so dass die Verteilmaschine selbst keine eigene Stromversorgung erfordert, sondern vom Bordnetz der Zugmaschine mit elektrischer Energie versorgt wird.

Im Übrigen erkennt man in der Fig. 3 im Bereich des dort vorderen linken Umfangsabschnittes des Dosierschiebers 18 eine sich hierzu etwa tangential erstreckende und in Bezug auf die Schwenkachse D des Dosierschiebers 18 exzentrisch angeordnete Lasche 45, an deren - im Erstreckungsrichtung der Lasche 45 bzw. in Umfangsrichtung des Dosierschiebers 18 betrachtet - Enden jeweils ein nach unten umgebogener Abschnitt mit je einer Bohrung 46a, 46b versehen ist. Die in Flucht angeordneten Bohrungen 46a, 46b der Lasche 45 dienen zum bedarfsweisen manuellen Einführen einer Handhabe 48, welche beispielsweise im Wesentlichen von einem Bedienhebel 49 mit einem dem Innenquerschnitt der Bohrungen 46a, 46b etwa entsprechenden bzw. demgegenüber etwas geringeren Außenquerschnitt und einem am freien Ende des Bedienhebels 49 angeordneten Handgriff 50 gebildet ist. Auf diese Weise kann der Dosierschieber 18 des Dosierorgans mittels der Handhabe 48 manuell geschlossen werden, sofern während der Feldarbeit eine Störung des Dosierorgans, des elektromotorischen Drehantriebs 28a desselben oder dessen elektrischer Stromversorgung auftreten sollte, um die Verteilmaschine ohne Verlust an Verteilgut abtransportieren zu können. Indes ist es selbstverständlich auch denkbar, dass die Handhabe 48 starr an dem Dosierschieber 18 angeordnet, dort beispielsweise verschraubt ist (nicht gezeigt).

Die in der Fig. 4 wiedergegebene Ausführungsvariante eines Antriebsmechanismus' des Dosierschiebers 18, bei welcher eine dem Antriebsmechanismus gemäß Fig. 3 weitgehend entsprechende elektromotorische Antriebseinheit 28a mit einem Getriebe 30a, 30b gemäß Fig. 6 oder 7 zum Einsatz gelangen kann, unterscheidet sich von jenem der Fig. 3 insbesondere dadurch, dass die Getriebeabtriebswelle 37 (vgl. Fig. 6 und 7) nicht koaxial zur Schwenkachse D des Dosierschiebers 18, sondern parallel und seitlich versetzt zu dieser angeordnet ist, wobei die elektromotorische Antriebseinheit 28a wiederum, z.B. über das Gehäuse 33 ihres Getriebes 30a, an dem drehbaren Boden 14 außerhalb des Unterteils 10 des Behälters 7 befestigt, beispielsweise verschraubt ist. An der Getriebeabtriebswelle 37 (vgl. Fig. 6 und 7) ist in diesem Fall ein sich hierzu im Wesentlichen radial erstreckender Mitnehmerarm 51 drehfest befestigt, an dessen freiem Ende, also exzentrisch in Bezug auf die Getriebeabtriebswelle 37 (Fig. 6 und 7) ein Hebel 52 angelenkt ist, z.B. um eine etwa vertikale Schwenkachse parallel zur Getriebeabtriebswelle 37 sowie parallel zur Schwenkachse D des Dosierschiebers 18 des Dosierorgans. An seinem dem Mitnehmerarm 51 entgegengesetzten Ende ist der Hebel 52 - wiederum um eine etwa vertikale Schwenkachse - an einem etwa radial nach außen von dem Dosierschieber 18 vorstehenden Fortsatz 53 angelenkt, und zwar wiederum exzentrisch in Bezug auf die Schwenkachse D des Dosierschiebers 18. Wird der auf der Getriebeabtriebswelle 37 sitzende Mitnehmerarm 51 folglich mittels des elektromotorischen Drehantriebs 28a entlang dem Abschnitt einer Kreisbahn bewegt, so betätigt der Hebel 52 den starr an dem Dosierschieber 18 befestigten oder einstückig mit diesem ausgebildeten Fortsatz 53, so dass der Dosierschieber 18 um seine Schwenkachse D in seine Schließ- oder eine beliebige Öffnungsstellung versetzt werden kann. Eine solche Ausgestaltung bietet sich insbesondere, wenn auch nicht ausschließlich, bei sehr beengtem Bauraum an, wenn der elektromotorische Drehantrieb 28a mit seinem Getriebe 30a, 30b nicht oder nur unter unwirtschaftlichem konstruktiven Aufwand bis in den Bereich der Schwenkachse D des Dosierschiebers 18 positioniert werden kann. Anstelle des Hebels 52 ist es beispielsweise auch denkbar, einen Riementrieb, wie einen Keil- oder insbesondere Zahnriementrieb, oder kämmende Zahnräder (oder beispielsweise auch nur ein auf der Getriebeabtriebswelle sitzendes Zahnrad, welches mit einer hierzu komplementären Verzahnung an einem Umfangsabschnitt des Dosierschiebers 18 im Eingriff steht) vorzusehen, welche die Getriebeabtriebswelle 37 mit der Schwenkachse D des Dosierschiebers 18 wirkverbinden (nicht gezeigt).

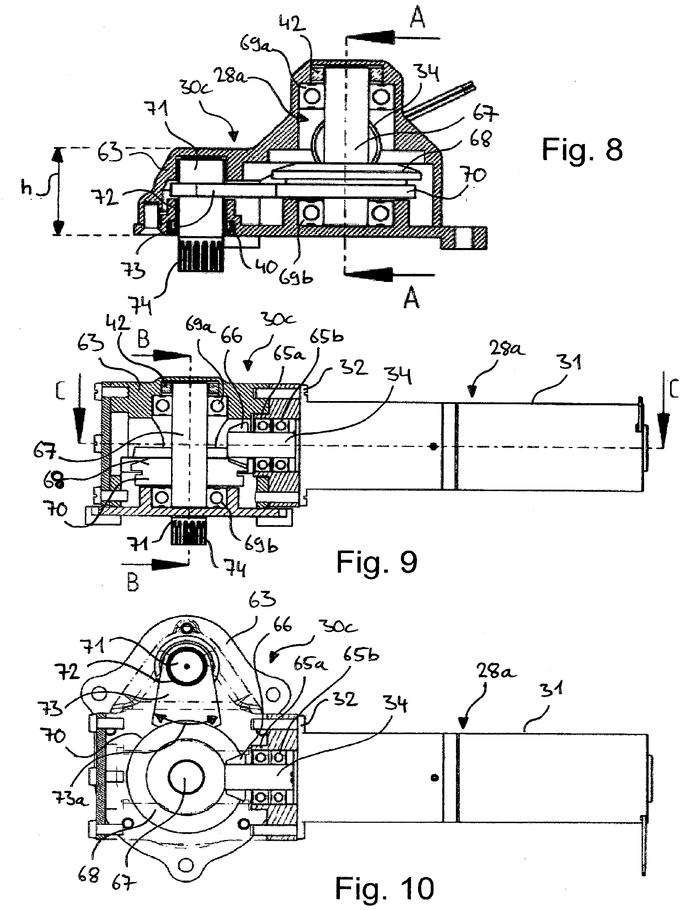

Eine weitere Möglichkeit, diesem Problem eines sehr beengten Bauraumes unter Entbehrlichmachen des Hebels 52 gemäß Fig. 4 zu begegnen, ergibt sich aus der in der Fig. 5 wiedergegebenen Ausführungsvariante eines Antriebsmechanismus' des Dosierschiebers 18 des Dosierorgans, bei welchem der elektromotorische Drehantrieb 28a wiederum über das Gehäuse seines Getriebes 30c derart an dem drehbaren Boden 14 befestigt ist, dass seine Getriebeabtriebswelle 71 (vgl. Fig. 8 bis 10) koaxial zur Schwenkachse D des Dosierschiebers 18 angeordnet ist, so dass die konstruktive Ausgestaltung weitestgehend jener gemäß Fig. 3 entspricht. Darüber hinaus haben freilich sämtliche Ausführungsformen der Fig. 3 bis 5 gemein, dass die ausschließlich rotatorische Bewegung der Getriebeabtriebswelle 71 auf die als schwenkbare Dosierschieber 18 ausgestalteten Funktionsteile der Dosiereinrichtungen übertragen wird, ohne dass etwaige Linearantriebe, wie Verstellspindeln oder insbesondere Kolben-/Zylindereinheiten, zum Einsatz gelangen.

Anstelle des reinen Winkelgetriebes 30a, 30b gemäß Fig. 6 bzw. 7 kommt bei der Ausführungsvariante gemäß Fig. 5 jedoch ein demgegenüber abgewandeltes Getriebe 30c zum Einsatz, wie es in den Fig. 8 bis 10 schematisch dargestellt ist, wobei der elektromotorische Drehantrieb 28a selbst derselbe sein kann und in den Fig. 8 bis 10 mit denselben Bezugszeichen versehen ist. Wie hieraus ersichtlich, ist das Getriebe 30c nach Art eines kombinierten Winkel-/Planetengetriebes ausgestaltet, dessen Getriebegehäuse 63 wiederum staub- und flüssigkeitsdicht an dem Gehäuseflansch 32 des elektromotorischen Drehantriebs 29a festgelegt ist. Die Abtriebswelle 34 des elektromotorischen Drehantriebs 28a durchsetzt den Gehäuseflansch 32 und ragt ins Innere des Getriebegehäuses 63 hinein, wo sie mittels Wälzlagern 65a, 65b gelagert ist. Im Bereich des freien Endes der Abtriebswelle 34 sitzt drehfest ein Kegelrad 66 mit kleinem Durchmesser, welches mit einem drehfest auf der - hier unter einem Winkel von etwa 90° in Bezug auf die Abtriebswelle 34 angeordneten - Zwischenwelle 67 sitzenden Kegelrad 68 mit demgegenüber großen Durchmesser in kämmendem Eingriff steht. Ebenfalls drehfest sitzt auf der Zwischenwelle 67, welche ihrerseits mittels Wälzlagern 69a, 69b in dem Getriebegehäuse 63 gelagert ist, ein Sonnenrad 70, welches im vorliegenden Fall einstückig mit dem Kegelrad 68 ausgestaltet ist, aber selbstverständlich auch von einem separaten Zahnrad gebildet sein kann. Die Getriebeabtriebswelle 71, welche im vorliegenden Fall aus Platzgründen mittels eines Gleitlagers 72 in dem Getriebegehäuse 63 gelagert ist, aber selbstverständlich grundsätzlich auch mittels eines Wälzlagers (nicht gezeigt) gelagert sein kann, erstreckt sich parallel zu der Zwischenwelle 67 und steht mit deren Sonnenrad 70 mittels eines am besten in der Fig. 10 erkennbaren Planetenradausschnittes 73 in kämmendem Eingriff, welcher drehfest auf der Getriebeabtriebswelle 71 sitzt. Der Planetenradausschnitt 73 besitzt eine im Wesentlichen kreissektorförmige Gestalt und erstreckt sich über einen Kreisbogen 73a (vgl. Fig. 10), welcher zumindest mit dem Schwenkwinkel korrespondiert, welcher erforderlich ist, um den Dosierschieber 18 (vgl. Fig. 5) zwischen einer gänzlichen Schließstellung und seiner gänzlichen Öffnungsstellung hin und her zu verschwenken. Auf diese Weise lässt sich die Getriebeabtriebswelle 71 sehr nahe eines Randes des Getriebegehäuses 63 positionieren, welches zudem im Bereich der Getriebeabtriebswelle 63 eine reduzierte Bauhöhe h aufweisen kann, wodurch es auch im Falle eines sehr beengten Bauraumes möglich ist, das Getriebegehäuse 63 unter koaxialer Anordnung seiner Getriebeabtriebswelle 71 im Bezug auf die Schwenkachse D des Dosierschiebers 18 an dem drehbaren Boden 14 zu montieren (vgl. wiederum die Fig. 5).

Die Getriebeabtriebswelle 71 durchsetzt folglich auch bei der Ausgestaltung gemäß Fig. 8 bis 10 das Getriebegehäuse 63 und ist gegen letzteres mittels einer Gleitringdichtung 40 (vgl. Fig. 8) staub- und flüssigkeitsdicht abgedichtet. An ihrem freien Ende ist die Getriebeabtriebswelle 71 wiederum mit einer geeigneten Profilierung 74 versehen, mittels welcher sie drehfest mit der Schwenkachse D des Dosierschiebers 18 des Dosierorgans (vgl. Fig. 3) verbunden werden kann. In dem Getriebegehäuse 63 ist ferner ein Positionserfassungssensor 42 untergebracht, welcher beim vorliegenden Ausführungsbeispiel am Umfang der Zwischenwelle 67 angeordnet ist und beispielsweise Induktionsgeber umfasst, welche nach Art eines Winkelsensors die genaue Winkelstellung der Zwischenwelle 67 bzw. - unter Berücksichtigung des Untersetzungsverhältnisses der Kombination aus Sonnenrad 70 und Planetenradausschnitt 73 - des drehfest mit der Getriebeabtriebswelle 71 verbindbaren Dosierschiebers 18 zu erfassen vermag. Der Positionserfassungssensor 42 kann indes grundsätzlich auch an der Abtriebswelle 34 der elektromotorischen Antriebseinheit 28a (z.B. in Analogie zu der Ausgestaltung gemäß Fig. 6) oder auch - sofern hinreichend Bauraum zur Verfügung steht - an der Getriebeabtriebswelle 71 angeordnet sein. Er steht in jedem Fall mit der Steuer- und/oder Regeleinrichtung der Verteilmaschine in Wirkverbindung, um die gewünschte Dosiermengen einzustellen sowie insbesondere anhand des gleichfalls sensorisch erfassten Ist-Massenstromes an Verteilgut (nicht gezeigt) zu regeln.

Schließlich sei der Vollständigkeit halber unter Bezugnahme auf die Fig. 1 bis 5 erwähnt, dass mit jedem drehbaren Boden 14, 15 zweckmäßigerweise eine Positionsanzeige 90, 91 in Form eines Zeigers verbunden sein kann, welcher mit einer stationär an einem jeweiligen Behälterteil 8, 9 des Behälters 7 festgelegten Skala 92, 93 zusammenwirkt, welche mit einer die Lage des Aufgabepunktes repräsentierenden Skalierung versehen sind.

## Patentansprüche

1. Verteilmaschine, insbesondere Streu- und/oder Sämaschine, mit wenigstens einem von einem Tragrahmen (1) getragenen Behälter (7; 8, 9) zur Aufnahme von pulver- und/oder partikelförmigem Verteilgut, wenigstens einer am Boden (14, 15) des Behälters (7; 8, 9) angeordneten Auslauföffnung (16, 17), einem der Auslauföffnung (16, 17) nachgeordneten Dosierorgan sowie wenigstens einem dem Dosierorgan nachgeordneten Verteilorgan zum Verteilen des Verteilgutes auf dem Boden, **dadurch gekennzeichnet, dass** wenigstens ein verlagerbares Funktionsteil
- des Dosierorgans (18) in Form wenigstens eines Dosierschiebers und/oder
- wenigstens einer Einrichtung zur Verstellung des Aufgabepunktes des Verteilgutes auf das Verteilorgan
mit einer Abtriebswelle (34) eines elektromotorischen Drehantriebs (28, 29; 28a) oder mit einer Getriebeabtriebswelle (37, 71) eines dem elektromotorischen Drehantriebs (28, 29; 28a) nachgeordneten Getriebes (30a, 39b, 30c) derart in Wirkverbindung steht und von dieser betätigt ist, dass die ausschließlich rotatorische Bewegung der Abtriebswelle (37, 71) oder der Getriebeabtriebswelle (37, 71) auf das verlagerbare Funktionsteil übertragbar ist.

2. Verteilmaschine nach Anspruch 1, **dadurch gekennzeichnet, dass** das verlagerbare Funktionsteil
(a) mit wenigstens einem, exzentrisch an der Abtriebswelle (34) des elektromotorischen Drehantriebs (28, 29; 28a) oder der Getriebeabtriebswelle (37, 71) angelenkten Hebel (24, 25, 52),
(b) um eine koaxial zu der Abtriebswelle (34) des elektromotorischen Drehantriebs (28, 29; 28a) oder zu der Getriebeabtriebswelle (37, 71) angeordnete Schwenkachse (D) schwenkbar, drehfest mit der Abtriebswelle (28, 29; 28a) oder der Getriebeabtriebswelle (37, 71), oder
(c) um eine unter radialem Abstand zu der Abtriebswelle (34) des elektromotorischen Drehantriebs (28, 29; 28a) oder zu der Getriebeabtriebswelle (37, 71) angeordnete Schwenkachse (D) schwenkbar, über kämmende Zahnräder oder einen Riementrieb mit der Abtriebswelle (28, 29; 28a) oder der Getriebeabtriebswelle (37, 71)
in Verbindung steht.

3. Verteilmaschine nach Anspruch 1 oder 2, **dadurch gekennzeichnet, dass** das verlagerbare Funktionsteil um eine Schwenk- (D) oder Drehachse (V) schwenkbar oder drehbar gelagert ist.

4. Verteilmaschine nach einem der Ansprüche 1 bis 3, **dadurch gekennzeichnet, dass** dem elektromotorischen Drehantrieb (28, 29; 28a) wenigstens ein Getriebe (30a, 30b, 30c), insbesondere in Form eines Koppelgetriebes, Koaxialgetriebes, Winkelgetriebes und/oder Planetengetriebes, nachgeordnet ist, welches einerseits mit der Abtriebswelle (34) des elektromotorischen Drehantriebs (28, 29; 28a) und dessen Getriebeabtriebswelle (37, 71) anderseits mit dem verlagerbaren Funktionsteil in Wirkverbindung steht.

5. Verteilmaschine nach einem der Ansprüche 1 bis 4, **dadurch gekennzeichnet, dass** die Abtriebswelle (34) des elektromotorischen Drehantriebs (28, 29; 28a), die Getriebeabtriebswelle (37, 71) oder wenigstens eine andere Welle (67) des Getriebes (30a, 30b, 30c) mit einem Positionserfassungssensor (42), insbesondere in Form
- eines Winkelsensors, welcher die Winkelstellung der Abtriebswelle (34), der Getriebeabtriebswelle (37, 71) oder der wenigstens einen anderen Welle (67) des Getriebes (30a, 30b, 30c) zu erfassen vermag, oder
- eines Drehzahlsensors, welcher die Anzahl an Umdrehungen der Abtriebswelle (34), der Getriebeabtriebswelle (37, 71) oder der wenigstens einen anderen Welle (67) des Getriebes (30a, 30b, 30c) zu erfassen vermag,
versehen ist, welcher mit einer Steuer- und/oder Regeleinrichtung der Verteilmaschine in Verbindung steht.

6. Verteilmaschine nach einem der Ansprüche 1 bis 5, **dadurch gekennzeichnet, dass** der elektromotorische Drehantrieb (28, 29; 28a) von der elektrischen Stromversorgung einer Zugmaschine, wie eines Traktors oder eines Straßenfahrzeugs, mit Strom versorgt ist, wobei der elektromotorische Drehantrieb (28, 29; 28a) insbesondere eine elektrische Schnittstelle aufweist, welche an die elektrische Stromversorgung der Zugmaschine anschließbar ist.

7. Verteilmaschine nach einem der Ansprüche 1 bis 6, **dadurch gekennzeichnet, dass** das von dem elektromotorischen Drehantrieb (28a) betätigte verlagerbare Funktionsteil in Form des Dosierschiebers (18) des wenigstens eines Dosierorgans mit der in einem Boden (14, 15) des Behälters (7; 8, 9) angeordneten Auslauföffnung (16, 17) zusammenwirkt und zwischen einer Schließstellung, in welcher der Dosierschieber (18) die Auslauföffnung (16, 17) gänzlich verschließt, und einer Mehrzahl an Öffnungsstellungen, in welcher er die Auslauföffnung (16, 17) gänzlich oder teilweise freigibt, um eine, insbesondere im Wesentlichen vertikale, Schwenkachse (D) schwenkbar ist.

8. Verteilmaschine nach Anspruch 7, **dadurch gekennzeichnet, dass**
- der Dosierschieber (18) schwenkbar an dem mit der Auslauföffnung (16, 17) versehenen Boden (14, 15) des Behälters (7; 8, 9) gelagert und/oder
- der elektromotorische Drehantrieb (28a) unmittelbar oder mittelbar über sein Getriebe (30a, 30b, 30c) an dem mit der Auslauföffnung (16, 17) versehenen Boden (14, 15) des Behälters (7; 8, 9) festgelegt
ist.

9. Verteilmaschine nach Anspruch 7 oder 8, **dadurch gekennzeichnet, dass** die Abtriebswelle (34) des elektromotorischen Drehantriebs (28a) oder die Getriebeabtriebswelle (37, 71) im Wesentlichen
- koaxial zu der Schwenkachse (D) des Dosierschiebers (18) angeordnet ist oder
- parallel zu der Schwenkachse (D) des Dosierschiebers (18) angeordnet ist, wobei die Abtriebswelle (34) des elektromotorischen Drehantriebs (28a) oder die Getriebeabtriebswelle (37, 71) mittels wenigstens eines hieran exzentrisch angelenkten Hebels (52), mittels kämmender Zahnräder oder mittels eines Riementriebs mit dem Dosierschieber (18) in Verbindung steht.

10. Verteilmaschine nach einem der Ansprüche 7 bis 9, **dadurch gekennzeichnet, dass** dem Dosierschieber (18) eine Handhabe (48), insbesondere im Wesentlichen in Form eines an dem Dosierschieber (18) exzentrisch zu seiner Schwenkachse (D) anordbaren Bedienhebels (49), zugeordnet ist, um den Dosierschieber (18) manuell betätigen zu können.

11. Verteilmaschine nach einem der Ansprüche 1 bis 10, **dadurch gekennzeichnet, dass** das von dem elektromotorischen Drehantrieb (28, 29) betätigte verlagerbare Funktionsteil der wenigstens einen Einrichtung zur Verstellung des Aufgabepunktes des Verteilgutes auf das Verteilorgan
- einen mit der Auslauföffnung (16, 17) versehenen, drehbar gelagerten Boden (14, 15) des Behälters (7; 8, 9) umfasst, wobei dem drehbaren Boden (14, 15) insbesondere Widerlager zur mechanischen Begrenzung seines Verdrehwinkels zugeordnet sind; oder
- eine dem Dosierorgan nachgeordnete, koaxial mit dem Verteilorgan drehbar gelagerte Hülse umfasst, welche oberhalb der Oberfläche des Verteilorgans angeordnet ist und eine radiale Aufgabeöffnung auf das Verteilorgan aufweist; oder
- eine dem Dosierorgan nachgeordnete, verlagerbare, insbesondere drehbar gelagerte, Rutsche umfasst.

12. Verteilmaschine nach Anspruch 11, **dadurch gekennzeichnet, dass**
- an dem mit der Auslauföffnung (16, 17) versehenen drehbaren Boden (14, 15),
- an der mit der Aufgabeöffnung versehenen drehbaren Hülse, oder
- an der verlagerbaren Rutsche
wenigstens ein Hebel (24, 25) in Bezug auf seine bzw. ihre Drehachse (V) exzentrisch angelenkt ist, welcher direkt oder über wenigstens einen weiteren Hebel (26, 27) exzentrisch an der Abtriebswelle (34) des elektromotorischen Drehantriebs (28, 29) oder an der Getriebeabtriebswelle (37, 71) angelenkt ist, wobei insbesondere
- der mit der Auslauföffnung (16, 17) versehene drehbare Boden (14, 15),
- die mit der Aufgabeöffnung versehene drehbare Hülse, oder
- die drehbar gelagerte Rutsche
mittels kämmender Zahnräder oder mittels eines Riementriebs mit der Abtriebswelle (34) des elektromotorischen Drehantriebs (28, 29) oder mit der Getriebeabtriebswelle (37, 71) in Verbindung steht.

13. Verteilmaschine nach Anspruch 11 oder 12, **dadurch gekennzeichnet, dass** die Abtriebswelle (34) des elektromotorischen Drehantriebs (28, 29) oder die Getriebeabtriebswelle (37, 71) im Wesentlichen parallel zur Drehachse (V)
- des mit der Auslauföffnung (16, 17) versehenen drehbaren Bodens (14, 15),
- der mit der Aufgabeöffnung versehenen drehbaren Hülse, oder
- der drehbaren Rutsche
angeordnet ist.

14. Verteilmaschine nach einem der Ansprüche 11 bis 13, **dadurch gekennzeichnet, dass** der elektromotorische Drehantrieb (28, 29)
- im zentralen Bereich der Verteilmaschine und/oder
- oberhalb des wenigstens einen, seine Abtriebswelle (34) oder die Getriebeabtriebswelle (37, 71) mit dem drehbaren Boden (14, 15), mit der drehbaren Hülse oder mit der verlagerbaren Rutsche verbindenden Hebels (24, 25)
angeordnet ist.

15. Verteilmaschine nach einem der Ansprüche 11 bis 14, **dadurch gekennzeichnet, dass** sie wenigstens zwei, insbesondere genau zwei, am Boden (14, 15) des Behälters (7; 8, 9) angeordneten Auslauföffnungen (16, 17) aufweist, welchen jeweils ein Dosierorgan sowie jeweils ein dem Dosierorgan nachgeordnetes Verteilorgan zum Verteilen des Verteilgutes auf dem Boden nachgeordnet ist, wobei das von dem elektromotorischen Drehantrieb (28, 29) betätigte verlagerbare Funktionsteil einer jeweiligen Einrichtung zur Verstellung des Aufgabepunktes des Verteilgutes auf das Verteilorgan jeweils
- einen mit einer jeweiligen Auslauföffnung (16, 17) versehenen, drehbar gelagerten Böden (14, 15) des Behälters (7; 8, 9), oder
- eine einem jeweiligen Dosierorgan nachgeordnete, mit der Aufgabeöffnung versehene und drehbar gelagerte Hülse, oder
- eine einem jeweiligen Dosierorgan nachgeordnete, verlagerbare, insbesondere drehbar gelagerte, Rutsche
umfasst, wobei insbesondere
- an jedem drehbaren Boden (14, 15),
- an jeder drehbaren Hülse, oder
- an jeder verlagerbaren Rutsche
wenigstens ein Hebel (24, 25) exzentrisch angelenkt ist, welcher direkt oder über wenigstens einen weiteren Hebel (26, 27) exzentrisch an der Abtriebswelle (34) wenigstens eines elektromotorischen Drehantriebs (28, 29) oder wenigstens einer Getriebeabtriebswelle (37, 71) angelenkt ist.

16. Verteilmaschine nach Anspruch 15, **dadurch gekennzeichnet, dass**
- jeder drehbare Boden (14, 15), jede drehbare Hülse oder jede drehbare Rutsche, insbesondere mittels des wenigstens einen Hebels (24, 25), mit einem eigenen elektromotorischen Drehantrieb (28, 29) in Verbindung steht, um den Aufgabepunkt durch Drehen eines jeweiligen Bodens (14, 15), einer jeweiligen Hülse oder einer jeweiligen Rutsche unabhängig voneinander zu verstellen; oder
- zumindest zwei drehbare Böden (14, 15), zwei drehbare Hülsen oder zwei drehbare Rutschen, insbesondere mittels je wenigstens eines Hebels (24, 25), mit einem gemeinsamen elektromotorischen Drehantrieb in Verbindung stehen, um den Aufgabepunkt durch gemeinsames Drehen der Böden (14, 15), der Hülsen oder der Rutschen gleichzeitig zu verstellen.

## Claims

1. A distribution machine, in particular a spreader and/or seed drill, having at least one container (7; 8, 9) which is carried by a support frame (1) for receiving pulverent and/or particulate material to be distributed, at least one outlet opening (16, 17) which is arranged on the floor (14, 15) of the container (7; 8, 9), a metering member which is arranged downstream of the outlet opening (16, 17) and at least one distribution member which is arranged downstream of the metering member for distributing the material to be distributed on the ground, **characterized in that** at least one displaceable functional part
- of the metering member (18) in the form of at least one metering slide and/or
- of at least one device for adjusting the delivery point of the material to be distributed onto the distribution member
is operatively connected to, and actuated by, an output shaft (34) of an electromotive rotary drive (28, 29; 28a) or a transmission output shaft (37, 71) of a transmission (30a, 39b, 30c) which is arranged downstream of the electromotive rotary drive (28, 29; 28a) in such a manner that the exclusively rotational movement of the output shaft (37, 71) or of the transmission output shaft (37, 71) is transmissible to the displaceable functional part.

2. The distribution machine as claimed in claim 1, **characterized in that** the displaceable functional part is connected
(a) by way of at least one lever (24, 25, 52), which is pivotally mounted eccentrically on the output shaft (34) of the electromotive rotary drive (28, 29; 28a) or of the transmission output shaft (37, 71),
(b) non-rotatably to the output shaft (28, 29; 28a) or to the transmission output shaft (37, 71) so as to be pivotable about a pivot axis (D) which is arranged coaxially to the output shaft (34) of the electromotive rotary drive (28, 29; 28a) or to the transmission output shaft (37, 71), or
(c) via meshing gears or a belt drive to the output shaft (28, 29; 28a) or the transmission output shaft (37, 71) so as to be pivotable about a pivot axis (D) which is arranged at a radial distance to the output shaft (34) of the electromotive rotary drive (28, 29; 28a) or to the transmission output shaft (37, 71).

3. The distribution machine as claimed in claim 1 or 2, **characterized in that** the displaceable functional part is mounted so as to be pivotable or rotatable about a pivot axis (D) or a rotational axis (V).

4. The distribution machine as claimed in one of claims 1 to 3, **characterized in that** at least one transmission (30a, 30b, 30c), in particular in the form of coupling gearing, coaxial gearing, angular gearing and/or planetary gearing, which is operatively connected on the one hand to the output shaft (34) of the electromotive rotary drive (28, 29; 28a) and the transmission output shaft thereof (37, 71) and on the other hand to the displaceable functional part, is arranged downstream of the electromotive rotary drive (28, 29; 28a).

5. The distribution machine as claimed in one of claims 1 to 4, **characterized in that** the output shaft (34) of the electromotive rotary drive (28, 29; 28a), the transmission output shaft (37, 71) or at least one other shaft (67) of the transmission (30a, 30b, 30c) is provided with a position detection sensor (42), in particular in the form of
- an angle sensor which is able to detect the angular position of the output shaft (34), of the transmission output shaft (37, 71) or of the at least one other shaft (67) of the transmission (30a, 30b, 30c), or
- a speed sensor which is able to detect the number of revolutions of the output shaft (34), of the transmission output shaft (37, 71) or of the at least one other shaft (67) of the transmission (30a, 30b, 30c),
which is connected to a control and/or regulating device of the distributing device.

6. The distribution machine as claimed in one of claims 1 to 5, **characterized in that** the electromotive rotary drive (28, 29; 28a) is supplied with current by the electric power supply of a towing unit, such as a tractor or a road vehicle, wherein the electromotive rotary drive (28, 29; 28a) comprises in particular an electric interface which is connectable to the electric power supply of the towing unit.

7. The distribution machine as claimed in one of claims 1 to 6, **characterized in that** the displaceable functional part, which is actuated by the electromotive rotary drive (28a), in the form of the metering slide (18) of the at least one metering member interacts with the outlet opening (16, 17) arranged in a floor (14, 15) of the container (7; 8, 9) and is pivotable about an, in particular substantially vertical, pivot axis (D) between a closed position, in which the metering slide (18) closes the outlet opening (16, 17) completely, and a multitude of open positions in which it opens the outlet opening (16, 17) completely or in part.

8. The distribution machine as claimed in claim 7, **characterized in that**
- the metering slide (18) is mounted so as to be pivotable on the floor (14 15) of the container (7; 8, 9) provided with the outlet opening (16, 17) and/or
- the electromotive rotary drive (28a) is secured directly or indirectly by means of its transmission (30a, 30b, 30c) to the floor (14, 15) of the container (7;, 8, 9) provided with the outlet opening (16, 17).

9. The distribution machine as claimed in claim 7 or 8, **characterized in that** the output shaft (34) of the electromotive rotary drive (28a) or the transmission output shaft (37, 71)
- is arranged substantially coaxially to the pivot axis (D) of the metering slide (18) or
- is arranged parallel to the pivot axis (D) of the metering slide (18), wherein the output shaft (34) of the electromotive rotary drive (28a) or the transmission output shaft (37, 71) is connected to the metering slide (18) by means of at least one lever (52) which is pivotally mounted hereon in an eccentric manner, by means of meshing gear wheels or by means of a belt drive.

10. The distribution machine as claimed in one of claims 7 to 9, **characterized in that** the metering slide (18) has assigned thereto a handle (48), in particular substantially in the form of an operating handle (49) which is arrangeable on the metering slide (18) eccentrically to its pivot axis (D) in order to be able to actuate the metering slide (18) manually.

11. The distribution machine as claimed in one of claims 1 to 10, **characterized in that** the displaceable functional part, actuated by the electromotive rotary drive (28, 29), of the at least one device for adjusting the delivery point of the material to be distributed onto the distribution member
- includes a rotatably mounted floor (14, 15) of the container (7; 8, 9) which is provided with the outlet opening (16, 17), wherein the rotatable floor (14, 15) has assigned thereto in particular thrust bearings for mechanically defining its angle of twist; or
- includes a sleeve which is arranged downstream of the metering member, is rotatably mounted coaxially with the distribution member, is arranged above the surface of the distribution member and comprises a radial delivery opening onto the distribution member; or
- a chute which is arranged downstream of the metering member, is displaceable and in particular is rotatably mounted.

12. The distribution machine as claimed in claim 11, **characterized in that** at least one lever (24, 25) is pivotably mounted in an eccentric manner with reference to its rotational axis (V)
- on the rotatable floor (14, 15) which is provided with the outlet opening (16, 17),
- on the rotatable sleeve which is provided with the delivery opening, or
- on the displaceable chute,
which lever (24, 25) is pivotally mounted directly or via at least one further lever (26, 27) in an eccentric manner on the output shaft (34) of the electromotive rotary drive (28, 29) or on the transmission output shaft (37, 71), wherein, in particular,
- the rotatable floor (14, 15) which is provided with the outlet opening (16, 17),
- the rotatable sleeve which is provided with the delivery opening, or
- the rotatably mounted chute
is connected to the output shaft (34) of the electromotive rotary drive (28, 29) or to the transmission output shaft (37, 71) by means of meshing gear wheels or by means of a belt drive.

13. The distribution machine as claimed in claim 11 or 12, **characterized in that** the output shaft (34) of the electromotive rotary drive (28, 29) or the transmission output shaft (37, 71) is arranged substantially parallel to the rotational axis (V)
- of the rotatable floor (14, 15) provided with the outlet opening (16, 17),
- to the rotatable sleeve provided with the delivery opening, or
- to the rotatable chute.

14. The distribution machine as claimed in one of claims 11 to 13, **characterized in that** the electromotive rotary drive (28, 29) is arranged
- in the central region of the distribution machine and/or
- above the at least one lever (24, 25) which connects its output shaft (34) or the transmission output shaft (37, 71) to the rotatable floor (14, 15), to the rotatable sleeve or to the displaceable chute.

15. The distribution machine as claimed in one of claims 11 to 14, **characterized in that** it comprises at least two, in particular exactly two outlet openings (16, 17) which are arranged on the floor (14, 15) of the container (7; 8, 9) and each of which have arranged downstream thereof a metering member and each of which have arranged downstream thereof a distribution member which is arranged downstream of the metering member for distributing the material to be distributed on the floor, wherein the displaceable functional part, actuated by the electromotive rotary drive (28, 29), of a respective device for adjusting the delivery point of the material to be distributed onto the distribution member includes in each case
- a rotatably mounted floor (14, 15) of the container (7; 8, 9) provided with a respective output opening (16, 17), or
- a rotatably mounted sleeve which is arranged downstream of the respective metering member and is provided with the delivery opening, or
- a displaceable, in particular rotatably mounted, chute which is arranged downstream of a respective metering member,
wherein, in particular, at least one lever (24, 25) is pivotably mounted in an eccentric manner
- on each rotatable floor (14, 15),
- on each rotatable sleeve, or
- on each displaceable chute,
which lever (24, 25) is pivotably mounted directly or via at least one further lever (26, 27) in an eccentric manner on the output shaft (34) of at least one electromotive rotary drive (28, 29) or of at least one transmission output shaft (37, 71).

16. The distribution machine as claimed in claim 15, **characterized in that**
- each rotatable floor (14, 15), each rotatable sleeve or each rotatable chute is connected to an own electromotive rotary drive (28, 29), in particular by means of at the at least one lever (24, 25), in order to adjust the delivery point as a result of rotating a respective floor (14, 15), a respective sleeve or a respective chute independently of one another; or
- at least two rotatable floors (14, 15), two rotatable sleeves or two rotatable chutes are connected, in particular by means of in each case at least one lever (24, 25), to one common electromotive rotary drive in order to adjust the delivery point as a result of rotating the floors (14, 15), the sleeves or the chutes together at the same time.

## Revendications

1. Machine de distribution, notamment machine à disperser et/ou à semer, avec au moins une cuve (7 ; 8, 9) supportée par un cadre porteur (1), pour recevoir un produit d'épandage sous forme de poudre et/ou de particules, avec au moins une ouverture d'évacuation (16, 17) disposée au fond (14, 15) de la cuve (7 ; 8, 9), avec un organe de dosage placé en aval de l'ouverture d'évacuation (16, 17) ainsi qu'avec un organe d'épandage placé en aval de l'organe de dosage pour l'épandage de produit d'épandage sur le sol,
**caractérisée en ce qu'**au moins une pièce fonctionnelle décalable :
- de l'organe de dosage (18) sous la forme d'au moins un piston de dosage ; et/ou
- d'au moins un dispositif de réglage du point cible du produit d'épandage sur l'organe d'épandage ;
est en liaison active avec un arbre d'entraînement en sortie (34) d'un entraînement en entrée tournant électromotorisé (28, 29 ; 28a) ou avec un arbre de transmission en sortie (37, 71) d'un engrenage (30a, 39b, 30c) placé en aval de l'entraînement en entrée tournant électromotorisé (28, 29 ; 28a) et est actionnée par lui, de telle sorte que le mouvement exclusivement rotatif de l'arbre d'entraînement en sortie (37, 71) ou de l'arbre de transmission en sortie (37, 71) puisse être transmis à la pièce fonctionnelle décalable.

2. Machine de distribution selon la revendication 1, **caractérisée en ce que** la pièce fonctionnelle décalable est reliée :
(a) à au moins un levier (24, 25, 52) articulé de façon excentrée à l'arbre d'entraînement en sortie (34) de l'entraînement en entrée tournant électromotorisé (28, 29 ; 28a) ou de l'arbre de transmission en sortie (37, 71) ;
(b) de façon à pouvoir pivoter, solidairement en rotation, à l'arbre d'entraînement en sortie (28, 29; 28a) ou l'arbre de transmission en sortie (37, 71), autour d'un axe de pivotement (D) disposé dans le plan coaxial par rapport à l'arbre d'entraînement en sortie (34) de l'entraînement en entrée tournant électromotorisé (28, 29 ; 28a) ou par rapport à l'arbre de transmission en sortie (37, 71) ; ou
(c) de façon à pouvoir pivoter, via des roues dentées engrenées ou une transmission à courroie, à l'arbre d'entraînement en sortie (28, 29 ; 28a) ou à l'arbre de transmission en sortie (37, 71), autour d'un axe de pivotement (D) disposé à une certaine distance radiale par rapport à l'arbre d'entraînement en sortie (34) de l'entraînement en entrée tournant électromotorisé (28, 29 ; 28a) ou à l'arbre de transmission en sortie (37, 71).

3. Machine de distribution selon la revendication 1 ou 2, **caractérisée en ce que** la pièce fonctionnelle décalable est disposée de façon à pouvoir pivoter ou à pouvoir tourner autour d'un axe de pivotement (D) ou d'un axe de rotation (V).

4. Machine de distribution selon l'une quelconque des revendications 1 à 3, **caractérisée en ce qu'**au moins un engrenage (30a, 30b, 30c), notamment sous la forme d'un engrenage de couplage, d'un engrenage coaxial, d'un engrenage angulaire et/ou d'un engrenage planétaire, est placé en aval de l'entraînement en entrée tournant électromotorisé (28, 29 ; 28a), ledit engrenage étant en liaison active d'une part avec l'arbre d'entraînement en sortie (34) de l'entraînement en entrée tournant électromotorisé (28, 29 ; 28a) et son arbre de transmission en sortie (37, 71) et d'autre part avec la pièce fonctionnelle décalable.

5. Machine de distribution selon l'une quelconque des revendications 1 à 4, **caractérisée en ce que** l'arbre d'entraînement en sortie (34) de l'entraînement en entrée tournant électromotorisé (28, 29 ; 28a), l'arbre de transmission en sortie (37, 71) ou au moins un autre arbre (67) de l'engrenage (30a, 30b, 30c) est pourvu d'un capteur de détection de position (42), notamment sous la forme :
- d'un capteur d'angle permettant de déterminer la position angulaire de l'arbre d'entraînement en sortie (34), de l'arbre de transmission en sortie (37, 71) ou de l'au moins un autre arbre (67.) de l'engrenage (30a, 30b, 30c) ; ou
- d'un capteur de vitesse de rotation pouvant détecter le nombre de tours de l'arbre d'entraînement en sortie (34), de l'arbre de transmission en sortie (37, 71) ou de l'au moins un autre arbre (67) de l'engrenage (30a, 30b, 30c) ;
ledit capteur de détection de position étant relié au dispositif de commande et/ou de réglage de la machine de distribution.

6. Machine de distribution selon l'une quelconque des revendications 1 à 5, **caractérisée en ce que** l'entraînement en entrée tournant électromotorisé (28, 29 ; 28a) est alimenté en courant par l'alimentation en courant électrique d'une machine de traction, par exemple un tracteur ou un véhicule routier, l'entraînement en entrée tournant électromotorisé (28, 29 ; 28a) comportant notamment une interface électrique pouvant être raccordée à l'alimentation en courant électrique de la machine de traction.

7. Machine de distribution selon l'une quelconque des revendications 1 à 6, **caractérisée en ce que** la pièce fonctionnelle décalable actionnée par l'entraînement en entrée tournant électromotorisé (28a) interagit, sous la forme du piston de dosage (18) de l'au moins un organe de dosage, avec l'ouverture d'évacuation (16, 17) disposée dans un plancher (14, 15) de la cuve (7 ; 8, 9) et peut pivoter entre une position de fermeture dans laquelle le piston de dosage (18) ferme totalement l'ouverture d'évacuation (16, 17) et une pluralité de positions d'ouverture dans lesquelles il libère totalement ou en partie l'ouverture d'évacuation (16, 17) autour d'un axe de pivotement (D), notamment pour l'essentiel vertical.

8. Machine de distribution selon la revendication 7, **caractérisée en ce que** :
- le piston de dosage (18) est disposé de façon à pouvoir pivoter au niveau du plancher (14, 15) de la cuve (7 ; 8, 9) pourvu de l'ouverture d'évacuation (16, 17) ; et/ou
- l'entraînement en entrée tournant électromotorisé (28a) est fixé directement ou indirectement au plancher (14, 15) de la cuve (7 ; 8, 9) pourvu de l'ouverture d'évacuation (16, 17) via son engrenage (30a, 30b, 30c).

9. Machine de distribution selon la revendication 7 ou 8, **caractérisée en ce que** l'arbre d'entraînement en sortie (34) de l'entraînement en entrée tournant électromotorisé (28a) ou l'arbre de transmission en sortie (37, 71) est disposé pour l'essentiel :
- dans le plan coaxial par rapport à l'axe de pivotement (D) du piston de dosage (18) ; ou
- parallèlement à l'axe de pivotement (D) du piston de dosage (18), l'arbre d'entraînement en sortie (34) de l'entraînement en entrée tournant électromotorisé (28a) ou l'arbre de transmission en sortie (37, 71) étant relié au piston de dosage (18) à l'aide d'au moins un levier (52) y étant articulé de façon excentrée, à l'aide de roues dentées engrenées ou à l'aide d'une transmission à courroie.

10. Machine de distribution selon l'une quelconque des revendications 7 à 9, **caractérisée en ce qu'**une manette (48), notamment pour l'essentiel sous la forme d'un levier de commande (49) pouvant être agencé au niveau du piston de dosage (18) de façon excentrée par rapport à son axe de pivotement (D), est associée au piston de dosage (18) pour permettre d'actionner manuellement le piston de dosage (18).

11. Machine de distribution selon l'une quelconque des revendications 1 à 10, **caractérisée en ce que** la pièce fonctionnelle décalable actionnée par l'entraînement en entrée tournant électromotorisé (28, 29) de l'au moins un dispositif destiné au réglage du point cible du produit d'épandage sur l'organe d'épandage comprend :
- un plancher (14, 15) de la cuve (7 ; 8, 9) pourvu de l'ouverture d'évacuation (16, 17) et disposé de façon à pouvoir tourner, des contre-paliers étant notamment associés au plancher (14, 15) pivotable pour la délimitation mécanique de son angle de rotation ; ou
- un fourreau placé en aval de l'organe de dosage et disposé dans le plan coaxial par rapport à l'organe d'épandage, de façon à pouvoir tourner, ledit fourreau étant disposé au-dessus de la surface de l'organe d'épandage et comportant une ouverture réceptrice radiale sur l'organe d'épandage ; ou
- un toboggan décalable, placé en aval de l'organe de dosage et notamment disposé de façon à pouvoir tourner.

12. Machine de distribution selon la revendication 11, **caractérisée en ce que** :
- au niveau du plancher (14, 15) pivotable pourvu de l'ouverture d'évacuation (16, 17) ;
- au niveau du fourreau pivotable pourvu de l'ouverture réceptrice ; ou
- au niveau du toboggan décalable ;
au moins un levier (24, 25) est articulé de façon excentrée par rapport à son axe de rotation (V), ledit levier étant articulé directement ou via au moins un levier supplémentaire (26, 27) à l'arbre d'entraînement en sortie (34) de l'entraînement en entrée tournant électromotorisé (28, 29) ou à l'arbre de transmission en sortie (37, 71) ; notamment :
- le plancher (14, 15) pivotable pourvu de l'ouverture d'évacuation (16, 17) ;
- le fourreau pivotable pourvu de l'ouverture réceptrice ; ou
- le toboggan disposé de façon à pouvoir pivoter ;
est relié à l'arbre d'entraînement en sortie (34) de l'entraînement en entrée tournant électromotorisé (28, 29) ou à l'arbre de transmission en sortie (37, 71) à l'aide de roues dentées engrenées ou à l'aide d'une transmission à courroie.

13. Machine de distribution selon la revendication 11 ou 12, **caractérisée en ce que** l'arbre d'entraînement en sortie (34) de l'entraînement en entrée tournant électromotorisé (28, 29) ou l'arbre de transmission en sortie (37, 71) est disposé pour l'essentiel parallèlement à l'axe de rotation (V)
- du plancher (14, 15) pivotable pourvu de l'ouverture d'évacuation (16, 17) ;
- du fourreau pivotable pourvu de l'ouverture réceptrice ; ou
- du toboggan pivotable.

14. Machine de distribution selon l'une quelconque des revendications 11 à 13, **caractérisée en ce que** l'entraînement en entrée tournant électromotorisé (28, 29) est disposé :
- dans la région centrale de la machine de distribution ; et/ou
- au-dessus de l'au moins un levier (24, 25) reliant son arbre d'entraînement en sortie (34) ou l'arbre de transmission en sortie (37, 71) avec le plancher (14, 15) pivotable, avec le fourreau pivotable ou avec le toboggan décalable.

15. Machine de distribution selon l'une quelconque des revendications 11 à 14, **caractérisée en ce qu'**elle comporte au moins deux, notamment précisément deux ouvertures d'évacuation (16, 17) disposées au niveau du plancher (14, 15) de la cuve (7 ; 8, 9), respectivement un organe de dosage ainsi que respectivement un organe d'épandage placé en aval de l'organe de dosage étant placés en aval desdites ouvertures pour la distribution du produit d'épandage, la pièce fonctionnelle décalable actionnée par l'entraînement en entrée tournant électromotorisé (28, 29) d'un dispositif respectif pour le déplacement du point cible du produit d'épandage sur l'organe d'épandage comprenant respectivement :
- un plancher (14, 15) de la cuve (7 ; 8, 9) pourvu d'une ouverture d'évacuation (16, 17) respective et disposé de façon à pouvoir pivoter ; ou
- un fourreau placé en aval d'un organe de dosage respectif et pourvu d'une ouverture réceptrice et disposé de façon à pouvoir pivoter ; ou
- un toboggan décalable, placé en aval d'un organe de dosage respectif, notamment disposé de façon à pouvoir pivoter ;
notamment au moins un levier (24, 25) étant articulé de façon excentrée, ledit levier étant articulé directement ou via au moins un levier (26, 27) supplémentaire de façon excentrée à l'arbre d'entraînement en sortie (34) d'au moins un entraînement en entrée tournant électromotorisé (28, 29) ou au moins d'un arbre de transmission en sortie (37, 71)
- au niveau de chaque plancher pivotable (14, 15) ;
- au niveau de chaque fourreau pivotable ; ou
- au niveau de chaque toboggan décalable.

16. Machine de distribution selon la revendication 15, **caractérisée en ce que** :
- chaque plancher (14, 15) pivotable, chaque fourreau pivotable ou chaque toboggan pivotable est relié, notamment à l'aide de l'au moins un levier (24, 25), à un entraînement en entrée tournant électromotorisé (28, 29) individuel pour régler le point cible par rotation d'un plancher (14, 15) respectif, d'un fourreau respectif ou d'un toboggan respectif indépendamment les uns des autres ; ou
- au moins deux planchers (14, 15) pivotables, deux fourreaux pivotables ou deux toboggans pivotables sont reliés, notamment à l'aide de respectivement au moins un levier (24, 25), à un entraînement en entrée tournant électromotorisé commun pour le réglage simultané du point cible par rotation commune des planchers (14, 15), des fourreaux ou des toboggans.
